# EUROPEAN PATENT APPLICATION

(11) **EP 3 869 855 A1**
(43) Date of publication of application: **25.08.2021**
(21) Application number: 19886847.3
(22) Date of filing: 19.11.2019
(51) Int. Cl.: H04W 28/06

(54) **INFORMATION TRANSMISSION METHOD AND APPARATUS THEREOF**

(30) Priority: 19.11.2018 CN 201811378445
(71) Applicant: Huawei Technologies Co., Ltd., Longgang District Shenzhen, Guangdong 518129 (CN)
(72) Inventor: ZHOU, Han, Shenzhen, Guangdong 518129 (CN); LI, Hancheng, Shenzhen, Guangdong 518129 (CN)
(74) Representative: Thun, Clemens
(86) International application number: PCT/CN2019/119509
(87) International publication number: WO 2020/103833

(57) **Abstract**

Embodiments of this application provide an information transmission method and an apparatus. The method includes: in a process in which a user terminal creates/modifies a PDU session between the user terminal and a user plane function network element, determining, by an application function network element, an association relationship of a port pair corresponding to the PDU session; determining delay information of the port pair; sending port pair information to TSN, where the port pair information includes the association relationship of the port pair and the delay information of the port pair; receiving first network topology information and/or second network topology information; and sending, by the application function network element, the first network topology information and/or the second network topology information to the TSN. In the embodiments of this application, attribute information of a virtual switching node can be obtained and reported in a 5G system, so that a TSN system plans a transmission path of a TSN flow on the virtual switching node and a network resource for the transmission path.

## Description

This application claims priority to Chinese Patent Application No. 201811378445.8, filed with the China Patent Office on November 19, 2018 and entitled "INFORMATION TRANSMISSION METHOD AND APPARATUS", which is incorporated herein by reference in its entirety.

### TECHNICAL FIELD

Embodiments of this application relate to the field of communications technologies, and specifically, to an information transmission method and an apparatus.

### BACKGROUND

Time sensitive networking (time sensitive networking, TSN) can help ensure real-time performance and certainty of the Ethernet, ensure reliability of delay-sensitive service data transmission, and predict an end-to-end transmission delay. TSN overcomes a disadvantage that the conventional Ethernet cannot provide transmission with high reliability and a specific delay, and can meet a requirement in a field such as vehicle control or the industrial internet. TSN includes a switching node (bridge) and a data terminal (end station). The data terminal is configured to send or receive a TSN flow, and data terminals may be classified into a transmit end (talker) and a receive end (listener). The switching node uses a destination media access control (media access control, MAC) address of the TSN flow as an identifier of the TSN flow, reserves a resource based on a delay requirement of the TSN flow, and schedules and forwards the TSN flow according to a scheduling rule, to ensure transmission reliability and a transmission delay, so as to implement deterministic end-to-end transmission.

In a TSN system, a switching node needs to provide attribute information of the switching node for a control plane network element in the TSN system. The attribute information includes network topology information and port pair information, and the port pair information includes an association relationship of a port pair and delay information of the port pair. When receiving the attribute information from the switching node, the control plane network element in the TSN system may plan a transmission path of a TSN flow based on the attribute information, and plan a network resource for the transmission path. The network resource is, for example, a transmission bandwidth reserved for the TSN flow, or a scheduling time slice allocated to a port for transmitting the TSN flow. The scheduling time slice means that a receive port receives a packet in a specified time period, and a transmit port sends a packet in a specified time period.

To implement deterministic end-to-end transmission in a fifth-generation (5^{th}-generation, 5G) system, an assumption that the 5G system may be virtualized into the switching node in the TSN system to implement a function of the switching node in the TSN is proposed. Specifically, based on a current network architecture of the 5G system, a control plane with a TSN adaptation function is added to an application function (application function, AF) network element, and a user plane with a TSN adaptation function is added to a user plane function (user plane function, UPF) network element and user equipment (user equipment, UE). The AF network element, the UPF network element, the UE, and the 5G system jointly form a logical switching node (logical bridge), that is, a virtual switching node, to serve as the switching node in the TSN.

As the virtual switching node, the 5G system also needs to report attribute information to the control plane network element in the TSN system, so that the control plane network element in the TSN system can plan a transmission path of a TSN flow on the virtual switching node and a network resource for the transmission path. However, currently, only the assumption that the 5G system is used as the virtual switching node in the TSN system is proposed, and how to obtain and report the attribute information of the virtual switching node when the 5G system is used as the virtual switching node is not proposed. Therefore, in the 5G system, how to obtain and report the attribute information of the virtual switching node is a technical problem to be urgently resolved.

### SUMMARY

A technical problem to be resolved in embodiments of this application is to provide an information transmission method and an apparatus, to obtain and report attribute information of a virtual switching node in a 5G system, so that a control plane network element in a TSN system plans a transmission path of a TSN flow on the virtual switching node and a network resource for the transmission path.

A first aspect of the embodiments of this application provides an information transmission method, including:
in a process in which a user terminal creates/modifies a PDU session between the user terminal and a user plane function network element, determining, by an application function network element, an association relationship of a port pair corresponding to the PDU session; determining delay information of the port pair; and sending port pair information to a time sensitive networking, where the port pair information includes the association relationship of the port pair and the delay information of the port pair.

The port pair corresponding to the PDU session is a port pair of a virtual switching node constructed by the user terminal, the user plane function network element, or the application function network element.

In the first aspect of the embodiments of this application, in the process in which the user terminal creates/modifies the PDU session, the application function network element determines the port pair information, and sends the port pair information to the time sensitive networking, so that the time sensitive networking creates/modifies a forwarding policy of a TSN flow on the virtual switching node based on the port pair information of the virtual switching node.

In a possible implementation, the application function network element determines, by receiving a first message from the user plane function network element or a session management network element, the association relationship of the port pair corresponding to the PDU session. The first message includes the association relationship of the port pair corresponding to the PDU session. After determining the association relationship of the port pair corresponding to the PDU session, the user plane function network element or the session management network element notifies the application function network element of the association relationship, to reduce a workload that the application function network element determines the association relationship, thereby helping reduce processing load of the application function network element.

In a possible implementation, the determining, by an application function network element, an association relationship of a port pair corresponding to the PDU session may specifically include: determining a virtual port identifier corresponding to the PDU session and a port identifier of the user plane function network element corresponding to the PDU session; and associating the virtual port identifier corresponding to the PDU session with the port identifier of the user plane function network element corresponding to the PDU session, to generate the association relationship of the port pair corresponding to the PDU session.

In a possible implementation, the application function network element may independently assign the virtual port identifier to the PDU session, to determine the virtual port identifier corresponding to the PDU session. The application function network element may alternatively determine, by receiving a second message from the user plane function network element or a session management network element, the virtual port identifier corresponding to the PDU session. The second message is used to indicate the virtual port identifier corresponding to the PDU session.

In a possible implementation, the application function network element determines, based on a DNN corresponding to the PDU session and port information of the user plane function network element, the port identifier of the user plane function network element corresponding to the PDU session. The DNN corresponding to the PDU session is carried in a message sent by a session management network element to the application function network element. The port information of the user plane function network element is reported by the user plane function network element to the application function network element. Specifically, the application function network element selects, from ports of the user plane function network element based on the DNN corresponding to the PDU session and the port information of the user plane function network element, a port that can serve the DNN, and determines the port as a port of the user plane function network element corresponding to the PDU session.

In a possible implementation, the application function network element determines, based on a DNN corresponding to the PDU session, VLAN information corresponding to the PDU session, and port information of the user plane function network element, the port identifier of the user plane function network element corresponding to the PDU session. Specifically, the application function network element selects, from ports of the user plane function network element based on the DNN corresponding to the PDU session, the VLAN information corresponding to the PDU session, and the port information of the user plane function network element, a port that can serve the DNN and a VLAN identified by the VLAN information, and determines the port as a port of the user plane function network element corresponding to the PDU session.

In a possible implementation, the application function network element determines, based on a DNN corresponding to the PDU session, VLAN information corresponding to the PDU session, CoS information and/or traffic class information corresponding to the PDU session, and port information of the user plane function network element, the port identifier of the user plane function network element corresponding to the PDU session. Specifically, the application function network element selects, from ports of the user plane function network element based on the DNN corresponding to the PDU session, the VLAN information corresponding to the PDU session, the CoS information and/or the traffic class information corresponding to the PDU session, and the port information of the user plane function network element, a port that can serve the DNN and a VLAN identified by the VLAN information and that can match the CoS information and/or the traffic class information, and determines the port as a port of the user plane function network element corresponding to the PDU session.

In a possible implementation, the application function network element determines, based on a DNN corresponding to the PDU session, CoS information and/or traffic class information corresponding to the PDU session, and port information of the user plane function network element, the port identifier of the user plane function network element corresponding to the PDU session. Specifically, the application function network element selects, from ports of the user plane function network element based on the DNN corresponding to the PDU session, the CoS information and/or the traffic class information corresponding to the PDU session, and the port information of the user plane function network element, a port that can serve the DNN and that can match the CoS information and/or the traffic class information, and determines the port as a port of the user plane function network element corresponding to the PDU session.

In a possible implementation, the application function network element determines the delay information of the port pair by receiving a third message from the user plane function network element, a session management network element, or a policy management network element. The third message includes the delay information of the port pair corresponding to the PDU session. After determining the delay information of the port pair corresponding to the PDU session, the user plane function network element, the session management network element, or the policy management network element notifies the application function network element of the delay information, to reduce a workload that the application function network element determines the delay information, thereby helping reduce processing load of the application function network element.

In a possible implementation, the third message further includes a 5QI or traffic class information corresponding to the delay information of the port pair, and the application function network element determines, based on the 5QI or the traffic class information, the traffic class information corresponding to the delay information of the port pair. In this case, the port pair information further includes the traffic class information corresponding to the delay information of the port pair, and the application function network element reports the delay information of the port pair to the time sensitive networking as the delay information corresponding to the traffic class information of the port pair.

Specifically, if the third message includes the 5QI corresponding to the delay information of the port pair, a mapping relationship between each 5QI and traffic class information is configured on the application function network element. When determining a 5QI of a QoS flow of the PDU session, the application function network element may determine, based on the mapping relationship, traffic class information corresponding to the 5QI, and determine the traffic class information as the traffic class information corresponding to the delay information of the port pair. If the third message includes the traffic class information corresponding to the delay information of the port pair, the application function network element may directly determine the traffic class information corresponding to the delay information of the port pair.

In a possible implementation, the application function network element may independently determine the delay information of the port pair. Specifically, the application function network element obtains a 5QI of the PDU session, determines a PDB corresponding to the 5QI, and determines the PDB corresponding to the 5QI as the delay information of the port pair. The 5QI of the PDU session may be from a session management network element or a policy management network element. The PDB corresponding to the 5QI may be directly notified by the policy management network element, or may be determined by an application function network element based on a correspondence between each 5QI and a PDB.

If a mapping relationship between a 5QI and traffic class information is configured on the application function network element, after determining the delay information of the port pair, the application function network element may determine, based on the mapping relationship, traffic class information corresponding to the 5QI, and determine the traffic class information as traffic class information corresponding to the delay information of the port pair. In this case, the port pair information further includes the traffic class information corresponding to the delay information of the port pair, and the application function network element reports the delay information of the port pair to the time sensitive networking as the delay information corresponding to the traffic class information of the port pair.

In a possible implementation, the application function network element receives first network topology information and/or second network topology information from a session management network element, and sends the first network topology information and/or the second network topology information to the time sensitive networking, so that the time sensitive networking can learn of the first network topology information and/or the second network topology information.

The first network topology information includes a device identifier of a first peer device connected to the user terminal, a port identifier of the first peer device, a virtual switching node identifier corresponding to the PDU session, and a virtual port identifier of the user terminal; and the second network topology information includes a device identifier of a second peer device connected to the user plane function network element corresponding to the PDU session, a port identifier of the second peer device, the virtual switching node identifier corresponding to the PDU session, and a port identifier of the user plane function network element.

In a possible implementation, the first network topology information further includes one or more of VLAN information and/or CoS information of the first peer device, port capability information of the first peer device, VLAN information and/or CoS information of a virtual port, or port capability information of the virtual port of the user terminal; and the second network topology information further includes one or more of VLAN information and/or CoS information of the second peer device, port capability information of the second peer device, VLAN information and/or CoS information of a port of the user plane function network element, or port capability information of the port of the user plane function network element.

A second aspect of the embodiments of this application provides an information transmission method, including:
a session management network element determines an association relationship of a port pair corresponding to a PDU session, and sends the association relationship of the port pair to a policy management network element, a user plane function network element, or an application function network element; and
the session management network element determines delay information of the port pair, and sends the delay information of the port pair to the policy management network element or the application function network element.

The session management network element sends the association relationship of the port pair to the policy management network element, the user plane function network element, or the application function network element, so that the policy management network element, the user plane function network element, or the application function network element determines the delay information of the port pair based on the association relationship of the port pair.

The session management network element sends the delay information of the port pair to the policy management network element or the application function network element, so that the application function network element learns of the delay information of the port pair.

In the second aspect of the embodiments of this application, the session management network element determines the association relationship of the port pair and the delay information of the port pair, so that the application function network element can learn of the port pair.

In a possible implementation, the session management network element may receive the delay information of the port pair from the user plane function network element, to reduce processing load of the session management network element.

In a possible implementation, the session management network element obtains a 5QI of the PDU session from the policy management network element, determines a PDB corresponding to the 5QI, and determines the PDB corresponding to the 5QI as the delay information of the port pair. The PDB corresponding to the 5QI may be directly notified by the policy management network element, or may be determined by the session management network element based on a correspondence between each 5QI and a PDB.

In a possible implementation, the session management network element obtains traffic class information corresponding to the PDU session. If a mapping relationship between a 5QI and traffic class information is configured on the session management network element, after determining the delay information of the port pair, the session management network element may determine, based on the mapping relationship, traffic class information corresponding to the 5QI, and determine the traffic class information as the traffic class information corresponding to the delay information of the port pair. The session management network element may alternatively obtain a mapping relationship between a 5QI and traffic class information from the policy management network element, or directly obtain, from the policy management network element, traffic class information corresponding to the 5QI.

In a possible implementation, the session management network element may receive the association relationship of the port pair from the user plane function network element. After determining the association relationship of the port pair corresponding to the PDU session, the user plane function network element notifies the session management network element of the association relationship, to reduce a workload that the session management network element determines the association relationship, thereby helping reduce a processing load of the session management network element.

In a possible implementation, that the session management network element determines an association relationship of a port pair corresponding to the PDU session may specifically include: determining a virtual port identifier corresponding to the PDU session and a port identifier of the user plane function network element corresponding to the PDU session; and associating the virtual port identifier corresponding to the PDU session with the port identifier of the user plane function network element corresponding to the PDU session, to generate the association relationship of the port pair corresponding to the PDU session.

In a possible implementation, the session management network element receives a PDU session management request for the PDU session. The PDU session management request includes a DNN corresponding to the PDU session, and the PDU session management request may be a PDU session creation request or a PDU session modification request.

The session management network element determines, based on port information of the user plane function network element and the DNN corresponding to the PDU session, the port identifier of the user plane function network element corresponding to the PDU session. The PDU session management request may be a PDU session creation request or a PDU session modification request.

In a possible implementation, the session management network element receives a PDU session management request for the PDU session. The PDU session management request includes a DNN corresponding to the PDU session and one or more of VLAN information, CoS information, or traffic class information corresponding to the PDU session. The PDU session management request may be a PDU session creation request or a PDU session modification request.

The session management network element determines, based on port information of the user plane function network element, the one or more of the VLAN information, the CoS information, or the traffic class information corresponding to the PDU session, and the DNN corresponding to the PDU session, the port identifier of the user plane function network element corresponding to the PDU session.

In a possible implementation, the session management network element receives a PDU session management request for the PDU session, and the PDU session management request includes a DNN corresponding to the PDU session. The session management network element obtains subscription data from the policy management network element, and the subscription data includes one or more of VLAN information, CoS information, or traffic class information corresponding to the PDU session.

The session management network element determines, based on port information of the user plane function network element, the one or more of the VLAN information, the CoS information, or the traffic class information corresponding to the PDU session, and the DNN corresponding to the PDU session, the port identifier of the user plane function network element corresponding to the PDU session.

In a possible implementation, the session management network element receives first network topology information from a user terminal corresponding to the PDU session, and/or receives second network topology information from the user plane function network element; and sends the first network topology information and/or the second network topology information to the application function network element, so that the application function network element learns of the first network topology information and/or the second network topology information and sends the first network topology information and/or the second network topology information to a time sensitive networking, thereby helping plan the time sensitive networking.

In a possible implementation, the first network topology information includes a device identifier of a first peer device connected to the user terminal, a port identifier of the first peer device, a virtual switching node identifier of a virtual switching node, and a virtual port identifier of the user terminal; and the second network topology information includes a device identifier of a second peer device connected to the user plane function network element, a port identifier of the second peer device, a virtual switching node identifier of a virtual switching node, and a port identifier of the user plane function network element.

In a possible implementation, the first network topology information further includes one or more of VLAN information and/or CoS information of the first peer device, port capability information of the first peer device, VLAN information and/or CoS information of a virtual port, or port capability information of the virtual port of the user terminal; and the second network topology information further includes one or more of VLAN information and/or CoS information of the second peer device, port capability information of the second peer device, VLAN information and/or CoS information of a port of the user plane function network element, or port capability information of the port of the user plane function network element.

In a possible implementation, the session management network element receives the first network topology information from the user terminal through a NAS message. The first network topology information is encapsulated in the NAS message through a management information base MIB/network configuration Netconf protocol.

In a possible implementation, the session management network element receives the second network topology information from the user plane function network element through an N4 interface message. The second network topology information is encapsulated in the N4 interface message through the MIB/Netconf protocol.

In a possible implementation, the session management network element receives first network topology information and/or second network topology information from the user plane function network element, and sends the first network topology information and/or the second network topology information to a time sensitive networking. This is equivalent to that a user terminal sends the first network topology information to the user plane function network element, and the user plane function network element forwards the first network topology information to the session management network element.

A third aspect of the embodiments of this application provides an application function network element, and the application function network element has a function of implementing the method provided in the first aspect. The function may be implemented by hardware, or may be implemented by hardware by executing corresponding software. The hardware or the software includes one or more modules corresponding to the foregoing function.

In a possible implementation, the application function network element includes a processing unit and a transceiver unit. The processing unit is configured to: in a process in which a user terminal creates/modifies a PDU session between the user terminal and a user plane function network element, determine an association relationship of a port pair corresponding to the PDU session; and determine delay information of the port pair. The transceiver unit is configured to send port pair information to a time sensitive networking, where the port pair information includes the association relationship of the port pair and the delay information of the port pair.

In a possible implementation, the application function network element includes a processor, a transceiver, and a memory. The memory stores a computer program, the computer program includes a program instruction, and the processor is configured to invoke the program instruction, to perform the following operations: in a process in which a user terminal creates/modifies a PDU session between the user terminal and a user plane function network element, determining an association relationship of a port pair corresponding to the PDU session; determining delay information of the port pair; and controlling the transceiver to send port pair information to a time sensitive networking, where the port pair information includes the association relationship of the port pair and the delay information of the port pair.

Based on a same inventive concept, for a problem-resolving principle and beneficial effects of the application function network element, refer to the method and beneficial effects brought by the method in the first aspect. Therefore, for implementation of the apparatus, refer to the implementation of the method. Repeated parts are not described again.

A fourth aspect of the embodiments of this application provides a computer-readable storage medium. The computer-readable storage medium stores an instruction, and when the instruction is run on a computer, the computer is enabled to perform the method in the first aspect.

A fifth aspect of the embodiments of this application provides a computer program product including an instruction. When the computer program product is run on a computer, the computer is enabled to perform the method in the first aspect.

A sixth aspect of the embodiments of this application provides a session management network element. The session management network element has a function of implementing the method provided in the second aspect. The function may be implemented by hardware, or may be implemented by hardware by executing corresponding software. The hardware or the software includes one or more modules corresponding to the foregoing function.

In a possible implementation, the session management network element includes a processing unit and a transceiver unit. The processing unit is configured to determine an association relationship of a port pair corresponding to a PDU session. The transceiver unit is configured to send the association relationship of the port pair. The processing unit is further configured to determine delay information of the port pair. The transceiver unit is further configured to send the delay information of the port pair.

In a possible implementation, the session management network element includes a processor, a transceiver, and a memory. The memory stores a computer program, the computer program includes a program instruction, and the processor is configured to invoke program code, to perform the following operations: determining an association relationship of a port pair corresponding to a PDU session; and controlling the transceiver to send the association relationship of the port pair. The processing unit is further configured to: determine delay information of the port pair; and control the transceiver to send the delay information of the port pair.

Based on a same inventive concept, for a problem-resolving principle and beneficial effects of the session management network element, refer to the method and beneficial effects brought by the method in the second aspect. Therefore, for implementation of the apparatus, refer to the implementation of the method. Repeated parts are not described again.

A seventh aspect of the embodiments of this application provides a computer-readable storage medium. The computer-readable storage medium stores an instruction, and when the instruction is run on a computer, the computer is enabled to perform the method in the second aspect.

An eighth aspect of the embodiments of this application provides a computer program product including an instruction. When the computer program product is run on a computer, the computer is enabled to perform the method in the second aspect.

A ninth aspect of the embodiments of this application provides an information transmission method, including:
a user terminal obtains a virtual switching node identifier and a virtual port identifier; and
the user terminal sends first information to a session management network element. The first information includes the virtual switching node identifier and the virtual port identifier, or the first information includes the virtual switching node identifier, the virtual port identifier, and port capability information of a virtual port, or the first information includes port capability information of a virtual port.

The first information may be encapsulated in a link layer discovery protocol (link layer discovery protocol, LLDP) packet, or may be encapsulated in a specific message through a MIB/Netconf protocol. For example, the user terminal may send the first information to the session management network element through a NAS message, and the first information is encapsulated in the NAS message through a MIB/Netconf protocol. For another example, the user terminal may alternatively send the first information to a user plane function network element through a user plane message, and the user plane function network element sends the first information to the session management network element through an N4 interface message. The first information may be encapsulated in the user plane message and the N4 interface message through the MIB/Netconf protocol.

The first information may be encapsulated in a specific message in a form of a container. For example, the NAS message may indicate an encapsulation type included in the container. The encapsulation type is, for example, a simple network management protocol (simple network management protocol, SNMP), a Netconf protocol, a JavaScript object notation (JavaScript object notation, JSON), or an LLDP. Optionally, the NAS message indicates a function of information in the container, for example, indicates that the information in the container is used for topology discovery or is used for a related TSN function.

In the ninth aspect of the embodiments of this application, the user terminal sends the virtual switching node identifier, the virtual port identifier, and the port capability information of the virtual port to the session management network element, so that the session management network element learns of the information and reports the information to an application function network element.

In a possible implementation, the user terminal receives a first packet from a first peer device. The first peer device is a device connected to the user terminal. The first packet includes a device identifier of the first peer device, a port identifier of the first peer device, one or more of VLAN information, CoS information, or traffic class information of the first peer device, and port capability information of the first peer device. In this case, the first information further includes the first packet, so that the session management network element further learns of topology information of a virtual switching node.

In a possible implementation, in a process in which the user terminal creates/modifies a PDU session, the user terminal receives, from the session management network element, a virtual switching node identifier corresponding to the PDU session and a virtual port identifier corresponding to the PDU session, to obtain the virtual switching node identifier and the virtual port identifier. The user terminal may extract, based on the virtual port identifier, port capability information of a virtual port identified by the virtual port identifier, and the port capability information may include a port bandwidth capability, a maximum rate, and the like.

A tenth aspect of the embodiments of this application provides a user terminal. The user terminal has a function of implementing the method provided in the ninth aspect. The function may be implemented by hardware, or may be implemented by hardware by executing corresponding software. The hardware or the software includes one or more modules corresponding to the foregoing function.

In a possible implementation, the user terminal includes a processing unit and a transceiver unit. The processing unit is configured to: in a process of creating/modifying a PDU session, obtain a virtual switching node identifier corresponding to the PDU session, a virtual port identifier corresponding to the PDU session, and port capability information of a virtual port identified by the virtual port identifier. The transceiver unit is configured to send a third packet to a session management network element, where the third packet includes the virtual switching node identifier, the virtual port identifier, and the port capability information of the virtual port.

In a possible implementation, the user terminal includes a processor, a transceiver, and a memory. The memory stores a computer program, the computer program includes a program instruction, and the processor is configured to invoke program code, to perform the following operations: in a process of creating/modifying a PDU session, obtaining a virtual switching node identifier corresponding to the PDU session, a virtual port identifier corresponding to the PDU session, and port capability information of a virtual port identified by the virtual port identifier; and controlling the transceiver to send a third packet to a session management network element, where the third packet includes the virtual switching node identifier, the virtual port identifier, and the port capability information of the virtual port.

Based on a same inventive concept, for a problem-resolving principle and beneficial effects of the user terminal, refer to the method and beneficial effects brought by the method in the ninth aspect. Therefore, for implementation of the apparatus, refer to implementation of the method. Repeated parts are not described again.

An eleventh aspect of the embodiments of this application provides a computer-readable storage medium. The computer-readable storage medium stores an instruction, and when the instruction is run on a computer, the computer is enabled to perform the method in the ninth aspect.

A twelfth aspect of the embodiments of this application provides a computer program product including an instruction. When the computer program product is run on a computer, the computer is enabled to perform the method in the ninth aspect.

### BRIEF DESCRIPTION OF DRAWINGS

To describe the technical solutions in the embodiments of this application or in the background more clearly, the following describes the accompanying drawings for describing the embodiments of this application or the background.
FIG. 1 is a schematic diagram of a network architecture of a 5G system;
FIG. 2 is a schematic diagram of a network topology of a TSN system;
FIG. 3 is a schematic diagram of a centralized management architecture of a TSN system;
FIG. 4a is a schematic diagram of a network architecture in which a 5G system is virtualized into a switching node in TSN;
FIG. 4b is a schematic diagram of a network architecture to which an embodiment of this application is applied;
FIG. 5 is a schematic flowchart of an information transmission method according to Embodiment 1 of this application;
FIG. 6 is a schematic flowchart of an information transmission method according to Embodiment 2 of this application;
FIG. 7 is a schematic flowchart of an information transmission method according to Embodiment 3 of this application;
FIG. 8 is a schematic flowchart of an information transmission method according to Embodiment 4 of this application;
FIG. 9 is a schematic flowchart of an information transmission method according to Embodiment 5 of this application;
FIG. 10 is a schematic flowchart of an information transmission method according to Embodiment 6 of this application;
FIG. 11 is a schematic diagram of a logical structure of a communications apparatus according to an embodiment of this application; and
FIG. 12 is a simplified schematic diagram of a physical structure of a communications apparatus according to an embodiment of this application.

### DESCRIPTION OF EMBODIMENTS

The following describes the technical solutions in the embodiments of this application with reference to accompanying drawings in the embodiments of this application. In the description of this application, "/" represents an "or" relationship between associated objects unless otherwise specified. For example, A/B may represent A or B. The term "and/or" in this application indicates only an association relationship for describing associated objects and represents that three relationships may exist. For example, A and/or B may represent the following three cases: Only A exists, both A and B exist, and only B exists, where A and B may be singular or plural. In addition, unless otherwise specified, "a plurality of' in the description of this application means two or more than two. "At least one of the following items (pieces)" or a similar expression means any combination of the items, including any combination of singular items (pieces) or plural items (pieces). For example, at least one (piece) of a, b, or c may indicate: a, b, c, a and b, a and c, b and c, or a, b, and c, where a, b, and c may be singular or plural. In addition, to clearly describe the technical solutions in the embodiments of this application, terms such as "first" and "second" are used in the embodiments of this application to distinguish between same items or similar items that have basically same functions and purposes. A person skilled in the art may understand that the terms such as "first" and "second" do not constitute a limitation on a quantity or an execution sequence, and that the terms such as "first" and "second" do not indicate a definite difference.

In addition, a network architecture and a service scenario that are described in the embodiments of this application are intended to describe the technical solutions in the embodiments of this application more clearly, and do not constitute a limitation on the technical solutions provided in the embodiments of this application. A person of ordinary skill in the art may learn that, as network architectures evolve and new service scenarios emerge, the technical solutions provided in the embodiments of this application are also applicable to similar technical problems.

A user terminal in the embodiments of this application may include various handheld devices, vehicle-mounted devices, wearable devices, or computing devices that have a wireless communication function, or other processing devices connected to a wireless modem; or may include UE, a subscriber unit (subscriber unit), a cellular phone (cellular phone), a smartphone (smart phone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, a mobile station (mobile station, MS), a terminal device (terminal device), relay user equipment, and the like. The relay user equipment may be, for example, a 5G residential gateway (residential gateway, RG). For ease of description, in the embodiments of this application, the devices mentioned above are collectively referred to as user terminals, and an example in which the user terminal is UE is used for description.

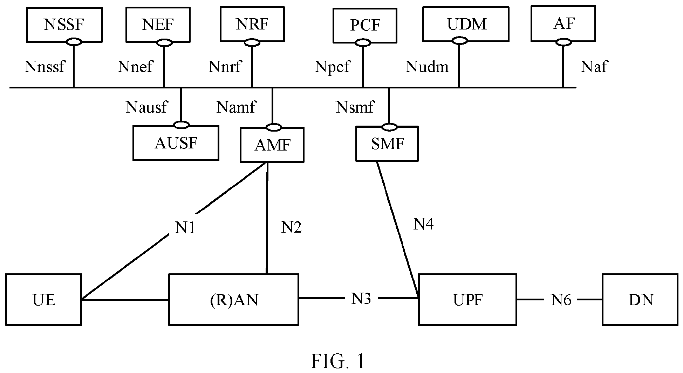

FIG. 1 is a schematic diagram of a network architecture of a 5G system. The network architecture includes UE, an access network (access network, RN) device, and core network elements.

The access network device may alternatively be a radio access network (radio access network, RAN) device.

The core network elements may include the following network elements: a UPF, a data network (data network, DN), an authentication server function (authentication server function, AUSF), an access and mobility management function (access and mobility management function, AMF), a session management function (session management function, SMF), a network slice selection function (network slice selection function, NSSF), a network exposure function (network exposure function, NEF), a network repository function (network repository function, NRF), a policy control function (policy control function, PCF), unified data management (unified data management, UDM), and an AF.

The core network elements may be classified into a control plane network element and a user plane network element. The user plane network element is a UPF network element, and is mainly responsible for forwarding a data packet, controlling quality of service (quality of service, QoS), collecting statistics about charging information, and the like. The control plane network element is mainly responsible for service procedure interaction, delivering a data packet forwarding policy and a QoS control policy to a user plane, and the like. The control plane network element in the embodiments of this application mainly includes the following network elements: an AMF, an SMF, a PCF, an AF, and an NEF.

The AMF network element is mainly responsible for access and mobility management of a user. The SMF network element is responsible for managing creation, deletion, and the like of a PDU session of the user, and maintaining a PDU session context and user plane forwarding pipeline information. The PCF network element is configured to generate and manage user, session, and QoS flow processing policies. The AF network element is a function network element configured to provide various business services, can interact with a core network through the NEF network element, and can interact with a policy management framework to perform policy management. The NEF network element is configured to: provide a framework, authentication, and an interface related to network capability exposure, and transmit information between a network function of the 5G system and another network function.

Communications interfaces between the network elements are further marked in the network architecture shown in FIG. 1. The communications interfaces in the embodiments of this application include: N1, which is a communications interface between the UE and the core network control plane AMF network element and is configured to transmit non-access stratum (non-access stratum, NAS) signaling; N2, which is a communications interface between the access network device and the AMF network element; N3, which is a communications interface between the access network device and the core network user plane UPF network element and is configured to transmit user data; and N4, which is a communications interface between the core network control plane SMF network element and the UPF network element and is configured to perform policy configuration and the like on the UPF network element.

In the embodiments of this application, a session management network element may be an SMF network element, or may be a network element that has the same function as the SMF network element in a future communications system; a user plane function network element may be a UPF network element, or may be a network element that has the same function as the UPF network element in a future communications system; an application function network element may be an AF network element, or may be a network element that has the same function as the AF network element; and a policy management network element may be a PCF network element, or may be a network element that has the same function as the PCF network element.

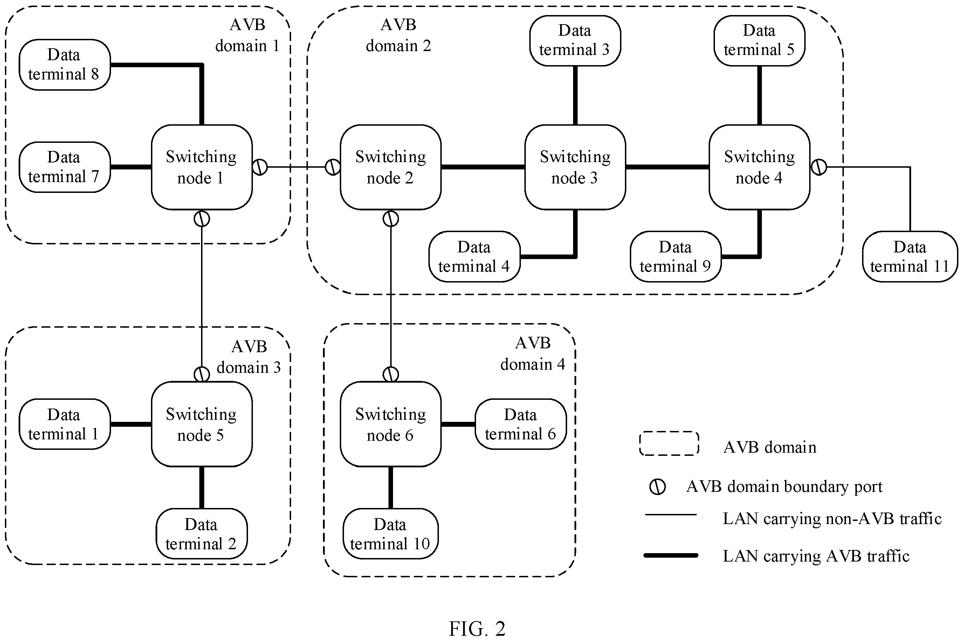

FIG. 2 is a schematic structural diagram of a network topology of a TSN system. In the network topology, four audio/video bridging (audio video bridging, AVB) domains are used as an example. AVB may also be referred to as TSN, and the AVB domain shown in FIG. 2 is also referred to as a TSN domain.

TSN is based on layer 2 transmission and includes a switching node and a data terminal. A difference from layer 2 switching at a link layer is as follows: The layer 2 switching at the link layer is based on media access control (media access control, MAC) address forwarding, and a switching device obtains a forwarding port by querying a MAC address learning table. However, the switching node in the TSN does not forward a TSN flow based on a MAC address learning table, but forwards the TSN flow according to a forwarding rule configured or created on the switching node. The TSN standard defines behavior of the data terminal and the switching node and a scheduling manner in which the switching node forwards the TSN flow, so as to implement reliable delay transmission. The switching node in the TSN uses a destination MAC address or another feature of the TSN flow as an identifier of the TSN flow, and performs resource reservation and scheduling planning based on a delay requirement of the TSN flow, to ensure reliability and a transmission delay according to a generated scheduling policy.

Data terminals are a transmitter and a receiver of a TSN flow. Specifically, the transmitter of the TSN flow may be referred to as a transmit end (talker), and the receiver of the TSN flow may be referred to as a receive end (listener). An AVB domain boundary port is a port that is in an AVB domain and that is connected to a switching node or a data terminal in another AVB domain. For example, there are two AVB domain boundary ports in an AVB domain 1, one port is connected to a switching node 2 in an AVB domain 2, and the other port is connected to a switching node 5 in an AVB domain 3. A TSN flow does not flow into an AVB domain boundary port. It may be understood that the TSN flow flows only through a switching node and a data terminal in the AVB domain. Therefore, a local area network (local area network, LAN) carries non-AVB traffic between AVB domain boundary ports, and a LAN carries AVB traffic in one AVB domain.

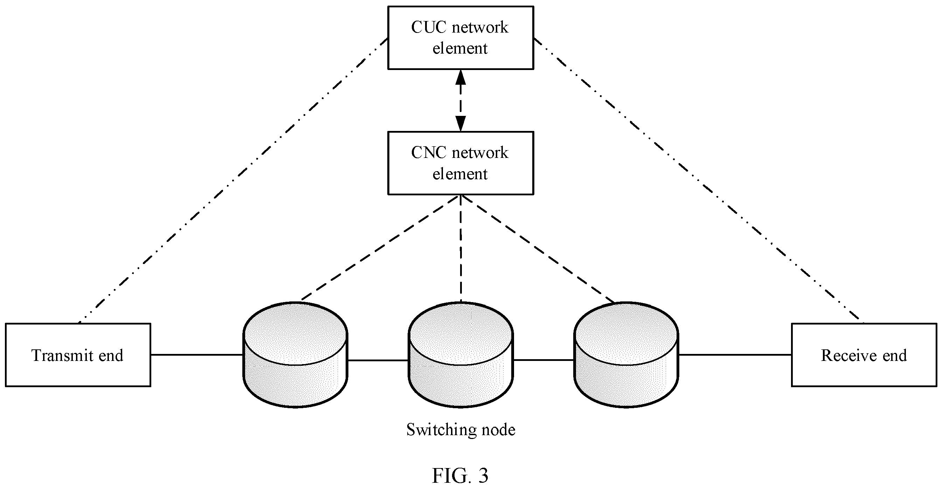

FIG. 3 is a schematic diagram of a centralized management architecture of a TSN system. The centralized management architecture is one of three architectures defined in 802.1qcc in the TSN standard. The centralized management architecture includes a transmit end, a receive end, a switching node, a centralized network configuration (centralized network configuration, CNC) network element, and a centralized user configuration (centralized user configuration, CUC) network element. It should be noted that a quantity of network elements and a form of the network element shown in FIG. 3 do not constitute a limitation on the embodiments of this application. In FIG. 3, one transmit end, one receive end, and three switching nodes are used as an example. In actual application, there may be a plurality of transmit ends, a plurality of receive ends, one switching node, or the like.

The switching node reserves a resource for a TSN flow according to a definition in the TSN standard, and schedules and forwards the TSN flow.

The CNC network element is responsible for managing a topology of a TSN user plane and capability information of the switching node, creating a TSN flow based on a TSN flow creation request provided by the CUC network element, generating a forwarding path of the TSN flow and processing policies on a data terminal and each switching node, and delivering a processing policy on a corresponding switching node to the switching node. The capability information of the switching node may include, for example, a sending delay of the switching node and an internal processing delay between ports of the switching node. The sending delay is a time from a moment at which a TSN flow is sent from a port of the switching node to a moment at which the TSN flow reaches a port of a peer switching node. The internal processing delay is a time from a moment at which a TSN flow enters from a port of the switching node to a moment at which the TSN flow is sent from another port of the switching node. The processing policy on the switching node may include, for example, ports and a time slice for receiving and sending a TSN flow. The time slice is time information of receiving and sending the TSN flow by the switching node. For example, the TSN flow is received within a time from t1 to t2.

The CUC network element is configured to: collect a TSN flow creation request of a data terminal, and after matching a request of the transmit end against a request of the receive end, request the CNC network element to create a TSN flow, and confirm a processing policy generated by the CNC network element. Matching the request of the transmit end against the request of the receive end means: The transmit end and the receive end each send a TSN flow creation request to the CUC network element, and the TSN flow creation request includes some information, for example, a destination MAC address of a requested TSN flow; the CUC network element matches destination MAC addresses of requested TSN flows in the TSN flow creation requests; and if destination MAC addresses of TSN flows requested by the two data terminals are the same, the two data terminals request a same TSN flow, the matching succeeds, and the CNC network element can create a TSN flow; or if destination MAC addresses of TSN flows requested by the two data terminals are different, only the TSN flow creation request of the transmit end or the receive end is available, the CUC network element cannot request the CNC network element to create a TSN flow, and therefore the CNC network element cannot create a TSN flow.

It may be understood that the CNC network element and the CUC network element are control plane network elements in the TSN system.

802.1qbv in the TSN standard defines a scheduling and forwarding manner: A switching node sends a TSN flow within a configured time slice. With reference to the centralized management architecture in the TSN that is shown in FIG. 2, deterministic end-to-end transmission can be implemented. The CNC network element obtains, through calculation based on a sending delay and an internal processing delay of each switching node, a time slice for receiving a TSN flow by each switching node on a forwarding path of the TSN flow and a time slice for sending the TSN flow by each switching node on the forwarding path of the TSN flow, generates forwarding policy information of each switching node, and delivers the corresponding forwarding policy information to each switching node. Therefore, each switching node receives and sends a specified TSN flow within determined time slices, so as to ensure that a time and a delay of transmitting the TSN flow on the entire forwarding path are determined. For example, a port 1 of a switching node receives a TSN flow within a time from t1 to t2, and the received TSN flow is sent from a port 2 within a time from t3 to t4. To implement this forwarding mechanism, the switching node in the TSN needs to support functions and corresponding capabilities shown in Table 1.

**Table 1**

| Function | Capability requirement |
|---|---|
| Topology discovery | Discover a switching node identifier and a port identifier, and support a protocol such as a link layer discovery protocol (link layer discovery protocol, LLDP) |
| Port transmission delay | Detect and report a sending delay |
| Internal processing delay | Determine a range of the internal processing delay |
| Report topology and delay information | Support an interface that is defined in TSN and that interacts with the CNC network element |

The topology discovery means that a switching node has a capability of discovering a switching node identifier and a port identifier of the switching node, and a capability of discovering a switching node identifier and a port identifier of a peer switching node. Supporting the protocol such as the LLDP means that information obtained through the topology discovery may be transmitted according to the protocol such as the LLDP. For example, a switching node 1 sends a switching node identifier and a port identifier of the switching node 1 to a switching node 2 through an LLDP packet, so that the switching node 2 learns of the switching node identifier and the port identifier of the switching node 1. The port transmission delay is a delay from a moment at which a packet is sent from a port of the switching node to a moment at which the packet is received by another device or another switching node. The internal processing delay is a delay from a moment at which a receive port of the switching node receives a packet to a moment at which the packet is sent from a transmit port of the switching node.

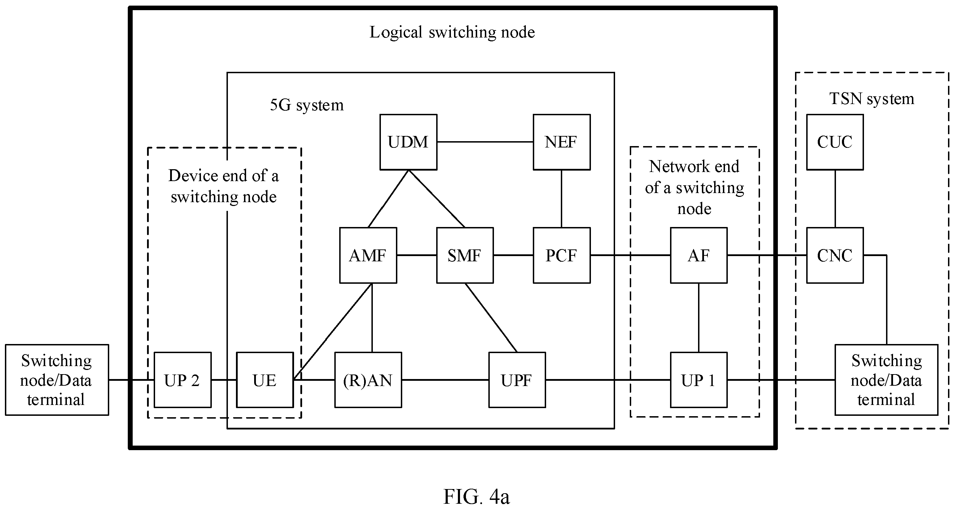

To implement deterministic end-to-end transmission in a fifth-generation (5^{th}-generation, 5G) system, an assumption that the 5G system may be virtualized into the switching node in the TSN to implement a function of the switching node in the TSN is proposed. For details, refer to a schematic diagram of a network architecture shown in FIG. 4a. A control plane with a TSN adaptation function is added to an AF network element, a user plane (user plane, UP) 1 with a TSN adaptation function is added to a UPF network element, and a UP 2 with a TSN adaptation function is added to UE. The AF network element, the UPF network element, the UE, and the 5G system jointly form a logical switching node, that is, a virtual switching node, which serves as the switching node in the TSN. Although the UPF and the UP 1, and the UE and the UP 2 are separately drawn in FIG. 4a, actually, the UP 1 and the UP 2 are logical functions of a user plane TSN adaptation function, and the UP 1 may be deployed on the UPF network element, or the UP 1 may be an internal function module of the UPF network element. Similarly, the UP 2 may be deployed on the UE, or the UP 2 may be an internal function module of the UE.

The TSN adaptation function is changing a feature and information of a 5G network into information required by TSN, to communicate with a network element in the TSN through an interface defined in the TSN.

The AF network element interacts with the CNC network element in the TSN system to transmit information. For example, the CNC network element sends forwarding policy information of a TSN flow on the virtual switching node to the AF network element.

Although the schematic diagram of the network architecture shown in FIG. 4a is proposed, how to obtain and report attribute information of the virtual switching node when the 5G system is used as the virtual switching node is not proposed, and consequently planning of a transmission path of the TSN flow on the virtual switching node and a network resource for the transmission path by the CNC network element in the TSN system is affected. The attribute information of the virtual switching node includes network topology information of the virtual switching node and port pair information of the virtual switching node. The port pair information includes an association relationship of a port pair and delay information of the port pair.

In view of this, the embodiments of this application provide an information transmission method and an apparatus, to obtain and report attribute information of a virtual switching node in a 5G system, so that a control plane network element in a TSN system plans a transmission path of a TSN flow on the virtual switching node and a network resource for the transmission path.

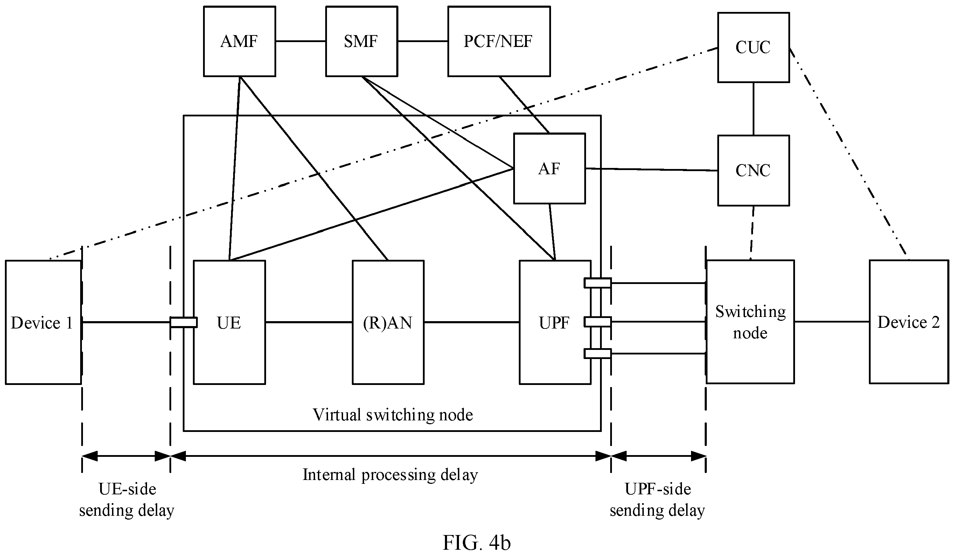

FIG. 4b is a schematic diagram of a network architecture to which an embodiment of this application is applied. In FIG. 4b, a 5G system is virtualized into a switching node in a TSN system. Ports of the virtual switching node include a UE-side virtual port and a UPF-side port. The virtual switching node includes UE, a (R)AN, a UPF network element, and an AF network element.

In this embodiment of this application, the UE-side virtual port included in the virtual switching node may be at a UE granularity. To be specific, one UE corresponds to one virtual port, and different UEs correspond to different virtual ports. Alternatively, the UE-side virtual port included in the virtual switching node may be at a PDU session granularity. To be specific, one PDU session corresponds to one virtual port, and different PDU sessions correspond to different virtual ports. Alternatively, the UE-side virtual port included in the virtual switching node may be at a TSN granularity. To be specific, one TSN domain corresponds to one or more virtual ports. The UE-side virtual port may be a UE-side physical port, and there may be one or more UE-side physical ports. Therefore, one UE may include one or more virtual ports. FIG. 4b shows one virtual port of the UE, but this does not constitute a limitation on this embodiment of this application. In actual application, there may be a plurality of UEs. At the UE granularity, the virtual switching node may include a plurality of virtual ports on a UE side.

In this embodiment of this application, the UPF-side port included in the virtual switching node is a physical port that actually exists in the UPF network element. One UPF network element may include a plurality of physical ports, and one physical port of the UPF network element corresponds to one virtual switching node. However, one virtual switching node may include a plurality of physical ports of one UPF network element, or may include a plurality of physical ports of a plurality of UPF network elements. The virtual switching node shown in FIG. 4b includes one UPF network element. The UPF network element includes three physical ports. The three physical ports correspond to a same virtual switching node, but this does not constitute a limitation on this embodiment of this application. In actual application, one virtual switching node includes more than one UPF network element. In this case, the UPF-side port included in the virtual switching node includes physical ports of more than one UPF network element.

For ease of differentiation, in this embodiment of this application, the UE-side virtual port of the virtual switching node is referred to as a virtual port of the virtual switching node, the UPF-side port of the virtual switching node is referred to as a physical port of the virtual switching node, and the UPF-side port is referred to as a physical port of the UPF for description.

In FIG. 4b, a user plane with a TSN adaptation function is deployed on the UE, or a user plane with a TSN adaptation function is an internal function module of the UE, that is, the UP 2 in FIG. 4a. The UP 2 is configured to: obtain attribute information of the UE-side virtual port, and send the attribute information to the AF network element through a user plane or a control plane. The attribute information of the virtual port may include external topology information corresponding to the virtual port and an external transmission delay (that is, a UE-side sending delay) of the virtual port. Likewise, a user plane with a TSN adaptation function is deployed on the UPF, or a user plane with a TSN adaptation function is an internal function module of the UPF, that is, the UP 1 in FIG. 4a. The UP 1 is configured to: obtain attribute information of the UPF-side physical port, and send the attribute information to the AF network element through the user plane or the control plane, and may further exchange user plane-related information and TSN parameter-related information with the AF network element. The attribute information of the physical port may include external topology information corresponding to the physical port and an external transmission delay (that is, a UPF-side sending delay) of the physical port.

In FIG. 4b, the AF network element is a logical network element, and may be a component in another logical network element (for example, a component in an SMF network element), or may be another control plane function network element. A name of the AF network element is not limited herein.

In FIG. 4b, a processing delay between the UE-side virtual port and the UPF-side physical port is referred to as an internal transmission delay. The internal transmission delay is specific to a port pair, and different port pairs may have different internal transmission delays, for example, an internal transmission delay 1 between a virtual port 1 and a physical port 1, and an internal transmission delay 2 between the virtual port 1 and a physical port 2. Values of the internal transmission delay 1 and the internal transmission delay 2 may be different.

In FIG. 4b, a device 1 and a device 2 may be equivalent to the data terminals in FIG. 2, or may be equivalent to the transmit end or the receive end in FIG. 3. The device 1 is connected to the UE-side virtual port, and the connection may be a physical link, or may be a virtual connection (for example, the device 1 is a processing unit of a device in which the UE is located). The device 1 may be a terminal device other than the UE, or may be a switching node. The device 1 shown in FIG. 4b is used as a terminal device to interact with a CUC network element. If the device 1 is a switching node, the device 1 interacts with a CNC network element (the device 1 is similar to a switching node that is connected to the UPF network element and that is shown in FIG. 4b). The device 2 shown in FIG. 4b is used as a terminal device to interact with the CUC network element. The device 2 is not directly connected to the physical port of the UPF network element. There is further a switching node between the device 2 and the virtual switching node. The switching node may be a switching node that actually exists in the TSN, for example, may be a switching node in a data network (data network, DN), or may be another virtual switching node. Alternatively, the device 2 may be directly connected to the physical port of the UPF network element.

The following describes in detail an information transmission method provided in the embodiments of this application. In descriptions of the information transmission method, descriptions are provided by using an example in which a user terminal is UE, a session management network element is an SMF network element, a user plane function network element is a UPF network element, an application function network element is an AF network element, and a policy management network element is a PCF network element. For ease of description, figures corresponding to the embodiments do not show the term "network element", and the term "network element" is not indicated in specific descriptions of the embodiments. However, this does not affect understanding of the embodiments of this application.

It should be noted that, in the following embodiments of this application, names of messages between network elements, names of parameters in messages, or the like are merely examples, and there may be other names during specific implementation. This is not specifically limited in the embodiments of this application.

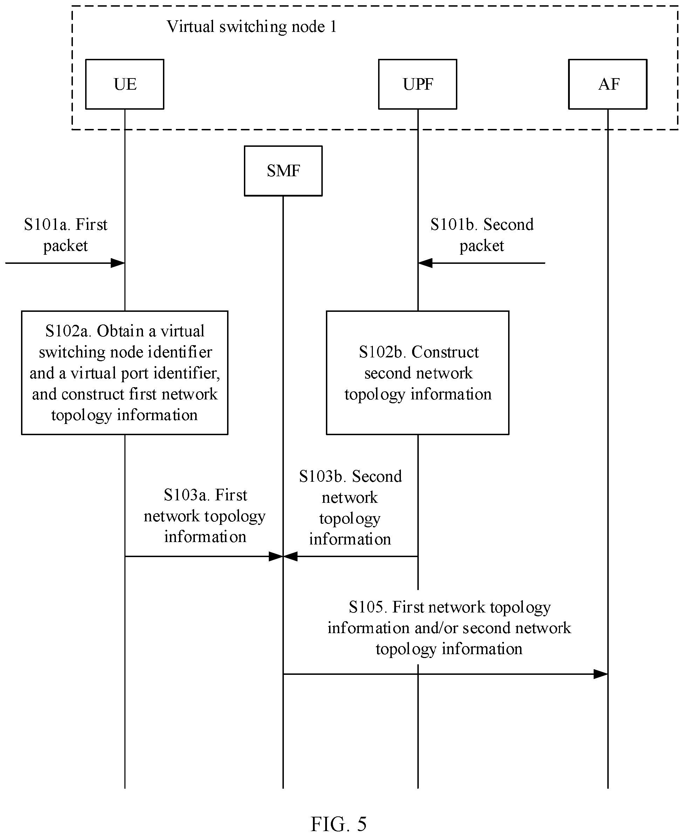

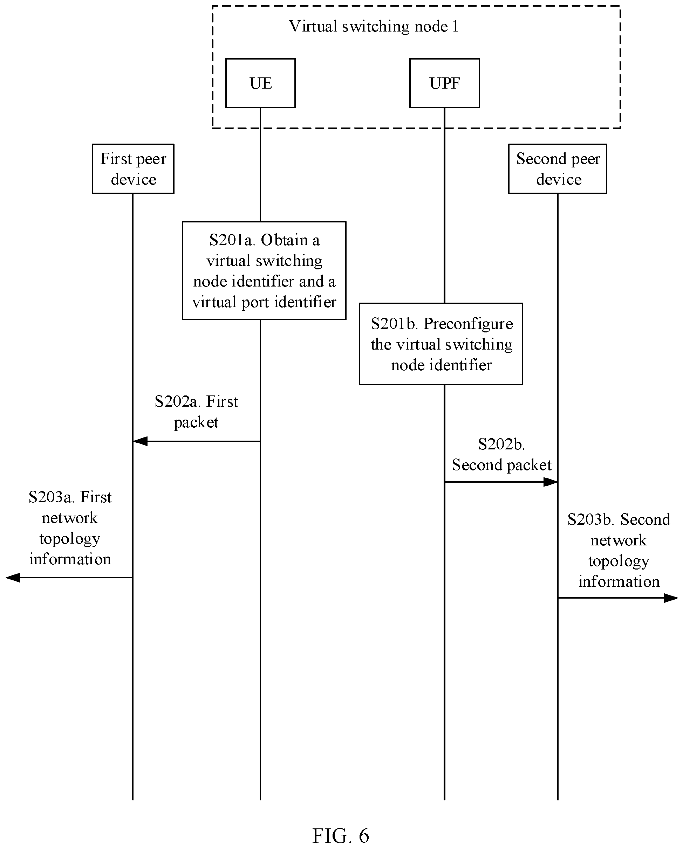

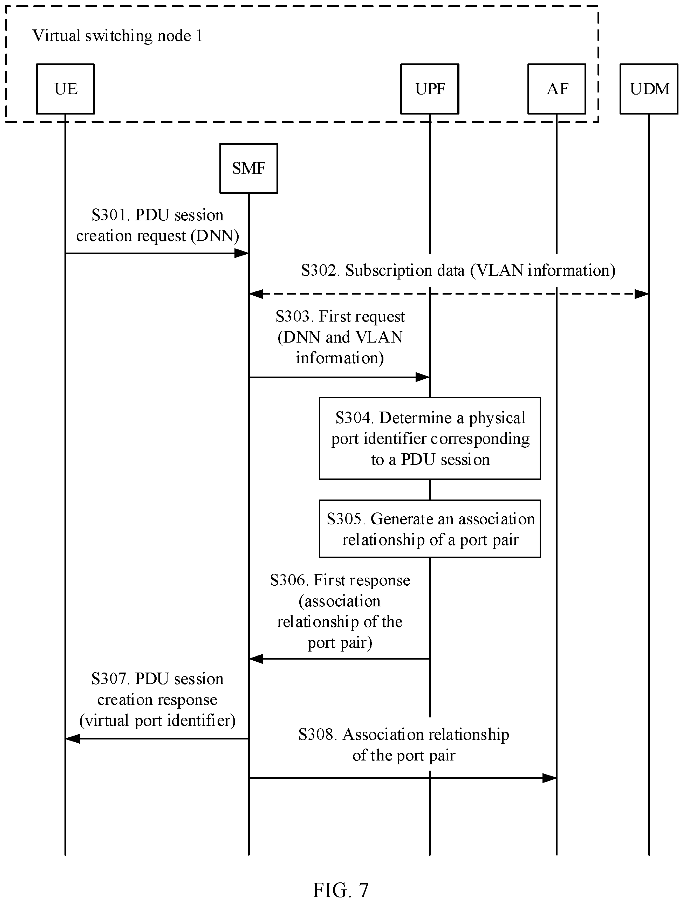

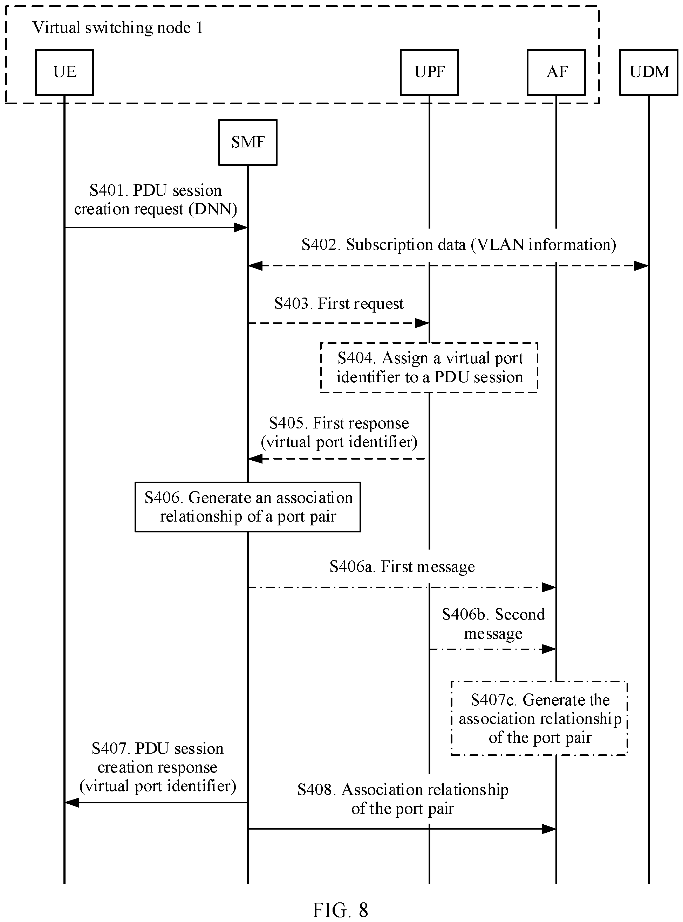

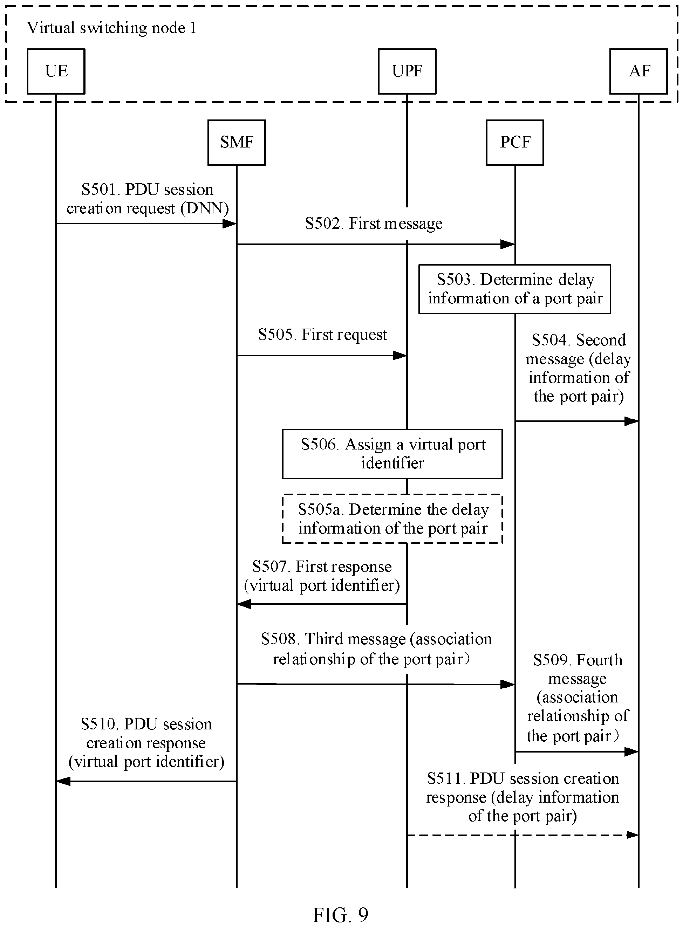

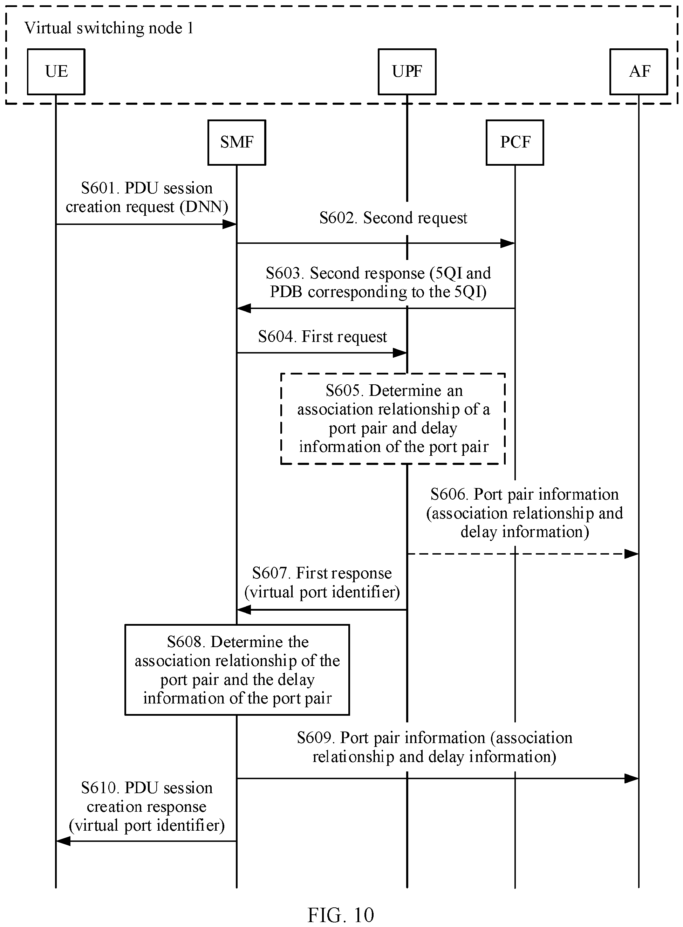

The information transmission method provided in the embodiments of this application is described in three parts. A first part is about obtaining and reporting network topology information (FIG. 5 and FIG. 6), a second part is about obtaining and reporting an association relationship of a port pair (FIG. 7 and FIG. 8), and a third part is about obtaining and reporting delay information of the port pair (FIG. 9 and FIG. 10).

An example in which the embodiments of this application are applied to the schematic diagram of the network architecture shown in FIG. 4b is used. FIG. 5 is a schematic flowchart of an information transmission method according to Embodiment 1 of this application. This embodiment is about obtaining and reporting network topology information. The embodiment shown in FIG. 5 may include but is not limited to the following steps.

Step S101a: UE receives a first packet.

The UE receives the first packet from a first peer device, and the first peer device is connected to the UE. The first packet may be an LLDP packet. This embodiment of this application is described by using an example in which a switching node virtualized based on an AF, UE, and a UPF in a 5G system is a virtual switching node 1. The virtual switching node 1 is a local virtual switching node.

In a possible implementation, the first peer device is a switching node other than the virtual switching node 1. A switching node other than the virtual switching node 1 may be a switching node in a TSN system, or may be another virtual switching node. Assuming that a switching node that sends the first packet is a switching node 2, the first packet may include a switching node identifier of the switching node 2, a port identifier of the switching node 2 (which is specifically an identifier of a port used by the switching node 2 to send the first packet), virtual local area network (virtual local area network, VLAN) information of the switching node 2, and port capability information of the switching node 2 (which is specifically port capability information used by the switching node 2 to send the first packet).

The VLAN information of the switching node 2 is used to identify a VLAN supported by the switching node 2, and may be a VLAN identity (identity, ID), a VLAN value (value), or the like. Optionally, the first packet further includes class of service (class of service, CoS) information of the switching node 2, and the CoS information may be a CoS ID, a CoS value, or the like. Further, the first packet includes the VLAN information and/or the CoS information of the switching node 2.

The port capability information used by the switching node 2 to send the first packet may include a maximum rate or a port bandwidth capability of a port through which the first packet is sent. The maximum rate may be a guaranteed bit rate (guaranteed bit rate, GBR), a maximum bit rate (maximum bit rate, MBR), an aggregate maximum bit rate (aggregate maximum bit rate, AMBR), or the like.

Optionally, the first packet further includes external topology information of the switching node 2 and an external sending delay of the switching node 2. One end of the switching node 2 is connected to the virtual switching node 1, and the other end of the switching node 2 is connected to another switching node or data terminal. The external topology information of the switching node 2 is a port connection relationship between the other end of the switching node 2 and the another switching node or data terminal. The external sending delay of the switching node 2 includes a sending delay between the switching node 2 and the virtual switching node 1, and/or a sending delay between the switching node 2 and another switching node or data terminal.

In a possible implementation, the first peer device is a data terminal other than the virtual switching node 1. Assuming that a data terminal that sends the first packet is a data terminal 1, the first packet includes a device identifier of the data terminal 1, a port identifier of the data terminal 1, VLAN information of the data terminal 1, and port capability information of the data terminal 1.

Step S102a: The UE obtains a virtual switching node identifier and a virtual port identifier, and constructs first network topology information.

The UE obtains the virtual switching node identifier of the virtual switching node 1 and the virtual port identifier of the virtual switching node 1. Specifically, the UE may receive the virtual switching node identifier and the virtual port identifier of the virtual switching node from an SMF in a process of creating or updating a PDU session. The virtual switching node identifier is a virtual switching node identifier corresponding to the PDU session. In this embodiment of this application, the virtual switching node identifier corresponding to the PDU session is an identifier of the virtual switching node 1, and the virtual port identifier of the virtual switching node is a virtual port identifier of the UE.

The virtual switching node identifier sent by the SMF to the UE may be from an AF. For example, in a process in which the UE creates the PDU session, after determining the virtual switching node identifier corresponding to the PDU session, the AF notifies the SMF of the virtual switching node identifier, so that the SMF sends the virtual switching node identifier to the UE after the PDU session is created. Alternatively, the SMF may directly determine the virtual switching node identifier. For example, when the SMF maintains a correspondence between an identifier of each UPF and a virtual switching node identifier, the SMF selects, in a process in which the UE creates the PDU session, a UPF corresponding to the PDU session, to further determine the virtual switching node identifier corresponding to the PDU session, and then sends the virtual switching node identifier corresponding to the PDU session to the UE.

The virtual port identifier of the virtual switching node that is sent by the SMF to the UE may be a virtual port identifier assigned by the SMF to the virtual switching node. Alternatively, the SMF may obtain the virtual port identifier of the virtual switching node by receiving a message from the AF. In this case, the AF assigns the virtual port identifier to the virtual switching node. Alternatively, the SMF may obtain the virtual port identifier of the virtual switching node by receiving a message from the UPF. In this case, the UPF assigns the virtual port identifier to the virtual switching node.

Optionally, in a process in which the UE creates or updates the PDU session, the SMF further sends, to the UE, VLAN information and/or CoS information corresponding to a virtual port of the UE, so that the UE determines the VLAN information and/or the CoS information corresponding to the virtual port of the UE. When one PDU session corresponds to one virtual port of the UE, the VLAN information and/or the CoS information corresponding to the virtual port of the UE is VLAN information and/or CoS information corresponding to the PDU session. When the virtual port of the UE is a physical port of the UE, if one PDU session corresponds to a plurality of physical ports of the UE, there may be a plurality of virtual ports of the UE. In this case, the VLAN information and/or the CoS information corresponding to the virtual port of the UE include/includes VLAN information and/or CoS information corresponding to each virtual port of the UE.

Optionally, after determining the virtual switching node identifier of the virtual switching node 1, the virtual port identifier of the UE, and optionally the VLAN information and/or the CoS information corresponding to the virtual port, the UE may determine, based on the received first packet, a first connection relationship between the virtual port of the UE and a port of the switching node 2 or the data terminal 1. Further, the UE may determine a first connection relationship between the virtual port of the UE and a port of the first peer device. The port of the first peer device is a port through which the first peer device sends the first packet, for example, a port through which the switching node 2 or the data terminal 1 sends the first packet.

The UE constructs the first network topology information based on the local virtual switching node identifier, the virtual port identifier of the UE, and the first packet. The first network topology information includes the device identifier of the first peer device, the port identifier of the first peer device, the local virtual switching node identifier, and the virtual port identifier of the UE. In other words, the first network topology information is used to indicate a port of a switching node (for example, the identifier of the virtual switching node 1 or the virtual port identifier of the UE) that is used as a local port, and a port of a switching node or a data terminal (for example, the identifier of the switching node 2 or the identifier of the port used to send the first packet) that is used as a peer port.

Optionally, the first network topology information further includes VLAN information and/or CoS information of the first peer device and port capability information of the first peer device. Optionally, the first network topology information further includes VLAN information and/or CoS information of a virtual port of the UE. Optionally, the first network topology information further includes a first connection relationship.

Step S103a: The UE sends the first network topology information to the SMF. Correspondingly, the SMF receives the first network topology information from the UE.

The UE may send the first network topology information to the SMF through a non-access stratum (non-access stratum, NAS) message. In other words, the NAS message including the first network topology information is sent to the SMF. An expression form of the first network topology information in the NAS message may be that the first network topology information is encapsulated in the NAS message through a management information base (management information base, MIB)/network configuration protocol (network configuration protocol, Netconf), or may be that the first packet or a packet constructed based on the first network topology information is encapsulated in the NAS message. The first network topology information may be encapsulated in the NAS message in a form of a container. The NAS message may indicate an encapsulation type included in the container. The encapsulation type is, for example, a simple network management protocol (simple network management protocol, SNMP), a Netconf protocol, a JavaScript object notation (JavaScript object notation, JSON), or an LLDP. Optionally, the NAS message indicates a function of information in the container, for example, indicates that the information in the container is used for topology discovery or is used for a related TSN function.

The UE may send the first network topology information to the UPF through a user plane message, and then the UPF sends the first network topology information to the SMF through an N4 interface message. An expression form of the first network topology information in the user plane message sent by the UE or the N4 interface message sent by the UPF to the SMF may be that the first network topology information is encapsulated through a MIB/Netconf protocol, or may be that the first packet or a packet constructed based on the first network topology information is encapsulated. The first network topology information may be encapsulated in the message in a form of a container. The message may indicate an encapsulation type included in the container. The encapsulation type is, for example, an SNMP, a Netconf protocol, a JSON, or an LLDP. Optionally, the message indicates a function of information in the container, for example, indicates that the information in the container is used for topology discovery or is used for a related TSN function.

The MIB defines an accessible network device and an attribute of the network device, and includes an organization form, a general structure, and a large quantity of possible objects that may be classified into several groups of information. The SNMP can perform an operation on the information defined by the MIB. The Netconf protocol provides a set of protocols for communication between a network administrator and a device. The network administrator can use the Netconf protocol to implement local management and deliver, modify, and delete a configuration of a remote device. The Netconf protocol supports a network configuration defined based on an extensible markup language.

When one PDU session corresponds to one virtual port, even if the first network topology information does not include the local virtual switching node identifier and the virtual port identifier of the UE, the SMF can still learn of the virtual switching node identifier and the virtual port identifier of the UE. This is because one PDU session corresponds to one virtual port, and the SMF can obtain a PDU session corresponding to a NAS message between the SMF and the UE from the message. Because the SMF sends, to the UE, the virtual switching node identifier and the virtual port identifier of the UE that are obtained by the SMF and that correspond to the PDU session, the SMF can determine, based on the PDU session, the switching node identifier and the virtual port identifier of the UE that correspond to the PDU session. In other words, the UE may not use the first network topology information to carry the local virtual switching node identifier and the virtual port identifier of the UE.

Step S101b: The UPF receives a second packet.

The UPF receives the second packet from a second peer device, and the second peer device is connected to the UPF. The second packet may be an LLDP packet. The second peer device may be a switching node other than the virtual switching node 1, which is assumed to be a switching node 3, or may be a data terminal other than the virtual switching node 1, which is assumed to be a data terminal 2.

Step S101b is similar to step S101a, and is different from step S101a only in an execution body and a peer device. For details, refer to specific descriptions of step S101a, and details are not described herein again.

Step S 102b: The UPF constructs second network topology information.

The UPF is configured with the virtual switching node identifier of the virtual switching node 1 and a physical port identifier of a physical port corresponding to the virtual switching node 1. One UPF has a plurality of physical ports, one UPF may carry a plurality of PDU sessions, and one PDU session may correspond to one or more physical ports. For example, a UPF 1 has 10 physical ports, physical port identifiers are respectively 1 to 10, physical ports identified by the physical port identifiers 1 to 5 correspond to a PDU session 1, and physical ports identified by the physical port identifiers 6 to 10 correspond to a PDU session 2. The physical port corresponding to the virtual switching node 1 is a physical port corresponding to a PDU session corresponding to the virtual switching node 1. For example, if the physical identifiers identified by the physical port identifiers 1 to 5 correspond to the PDU session 1, and the PDU session 1 corresponds to the virtual switching node 1, the physical port corresponding to the virtual switching node 1 is the physical ports identified by the physical port identifiers 1 to 5.

The UPF is further configured with VLAN information and/or CoS information corresponding to the physical port, and a port bandwidth capability, a maximum rate, and the like of the physical port. Optionally, when receiving the second packet, the UPF determines an identifier of a physical port used to receive the second packet, and a second connection relationship between the physical port identifier and a port of the second peer device. The port of the second peer device is a port through which the second peer device sends the second packet, for example, a port through which the switching node 3 or the data terminal 2 sends the second packet.

Content included in the second network topology information is similar to the content included in the first network topology information. For details, refer to the foregoing specific descriptions of the first network topology information.

Step S103b: The UPF sends the second network topology information to the SMF. Correspondingly, the SMF receives the second network topology information from the UPF.

Optionally, a manner in which the UPF sends the second network topology information to the SMF is similar to the manner in which the UPF forwards the first network topology information to the SMF. For details, refer to the foregoing specific descriptions of sending the first network topology information to the SMF by the UE through the user plane message.

Step S104: The SMF sends the first network topology information and/or the second network topology information to the AF.

The SMF sends the first network topology information and/or the second network topology information to the AF, so that the AF sends the first network topology information and/or the second network topology information to a CNC in the TSN system, and the CNC learns of the first network topology information and/or the second network topology information. In this case, the CNC can learn of a topology connection relationship between the virtual switching node 1 and the first peer device and a topology connection relationship between the virtual switching node 1 and the second peer device based on the first network topology information and the second network topology information. Further, the CNC can obtain a topology connection relationship between switching nodes based on network topology information reported by the switching nodes.

Optionally, the SMF generates network topology information based on the first network topology information and/or the second network topology information.

The SMF generates the network topology information of the virtual switching node 1 based on the first network topology information and/or the second network topology information. The network topology information includes a device identifier of the first peer device, a port identifier of the first peer device, a device identifier of the second peer device, a port identifier of the second peer device, an identifier of the virtual switching node 1, a virtual port identifier of the UE, and a physical port identifier of a physical port corresponding to the virtual switching node 1. Optionally, the network topology information further includes VLAN information and/or CoS information of the first peer device, port capability information of the first peer device, a first connection relationship, VLAN information and/or CoS information of the second peer device, port capability information of the second peer device, a second connection relationship, VLAN information and/or CoS information corresponding to a virtual port of the UE, port capability information of the virtual port of the UE, VLAN information and/or CoS information corresponding to the physical port, and port capability information of the physical port.

In Embodiment 1 shown in FIG. 5, the UE constructs the first network topology information based on the first packet of the first peer device, and sends the first network topology information to the SMF. The UPF constructs the second network topology information based on the second packet of the second peer device, and sends the second network topology information to the AF, and the AF reports the second network topology information to the TSN system, so that the TSN system learns of the topology connection relationship between the first peer device and the virtual switching node and the topology connection relationship between the second peer device and the virtual switching node, thereby facilitating planning by the CNC.

In a possible implementation, after constructing the first network topology information, the UE may send the first network topology information to the UPF, and the UPF may send the first network topology information to the AF. After constructing the second network topology information, the UPF may send the second network topology information to the AF. In this way, processing load of the SMF can be relieved. Optionally, the UPF generates the network topology information of the virtual switching node based on the first network topology information and the second network topology information, and sends the network topology information to the AF. Alternatively, after constructing the second network topology information, the UPF sends the first network topology information and the second network topology information to the SMF, and the SMF sends the first network topology information and the second network topology information to the AF, so that the SMF learns of the first network topology information and/or the second network topology information. The UE may send the first network topology information to the UPF through a user plane message.

An example in which the embodiments of this application are applied to the schematic diagram of the network architecture shown in FIG. 4b is used. FIG. 6 is a schematic flowchart of an information transmission method according to Embodiment 2 of this application. This embodiment is about obtaining and reporting network topology information. The embodiment shown in FIG. 6 may include but is not limited to the following steps.

Step S201a: UE obtains a virtual switching node identifier and a virtual port identifier.

The UE obtains the virtual switching node identifier of a virtual switching node 1 and the virtual port identifier of the virtual switching node 1. Specifically, the UE may receive the virtual switching node identifier and the virtual port identifier of the virtual switching node from an SMF in a process of creating or updating a PDU session. The virtual switching node identifier is a virtual switching node identifier corresponding to the PDU session, and the virtual port identifier of the virtual switching node is a virtual port identifier of the UE.

Step S202a: The UE sends a first packet to a first peer device. Correspondingly, the first peer device receives the first packet from the UE.

The UE sends the first packet to the first peer device. The first peer device is connected to the UE, and is a switching node other than the virtual switching node 1. It is assumed that the first peer device is a switching node 2. The first packet may be an LLDP packet.

The first packet may include the virtual switching node identifier of the virtual switching node 1, a virtual port identifier of the UE, VLAN information and/or CoS information corresponding to a virtual port of the UE, and port capability information of the virtual port of the UE. The UE sends a port bandwidth capability or a parameter such as a GBR, an MBR, or an AMBR corresponding to a UE service to the first peer device as a maximum rate of the virtual port, so that the first peer device can learn of the port bandwidth capability or the maximum rate of the virtual port of the UE. In other words, the port capability information of the virtual port of the UE includes the port bandwidth capability or the maximum rate of the virtual port of the UE.

Step S203a: The first peer device sends first network topology information to a CNC. Correspondingly, the CNC receives the first network topology information from the first peer device.

Optionally, when receiving the first packet from the UE, the first peer device determines a first connection relationship between the virtual port of the UE and a port of the first peer device based on the port through which the first packet is received and the virtual port identifier of the UE.

The first peer device constructs the first network topology information based on a switching node identifier of the switching node 2, an identifier of the port used to receive the first packet, and the first packet. The first network topology information includes the virtual switching node identifier of the virtual switching node 1, the virtual port identifier of the UE, the switching node identifier of the switching node 2, and the identifier of the port used to receive the first packet.

Optionally, the first network topology information further includes VLAN information and/or CoS information corresponding to a virtual port of the UE and port capability information of the virtual port of the UE. Optionally, the first network topology information further includes VLAN information and/or CoS information of the first peer device and port capability information of the first peer device. Optionally, the first network topology information further includes a first connection relationship.

Step S201b: A UPF preconfigures the virtual switching node identifier.

The UPF preconfigures the virtual switching node identifier of the virtual switching node 1 and a physical port identifier of a physical port corresponding to the virtual switching node 1. The UPF further configures VLAN information and/or CoS information corresponding to the physical port, and a port bandwidth capability, a maximum rate, and the like of the physical port.

Step S202b: The UPF sends a second packet to a second peer device. Correspondingly, the second peer device receives the second packet from the UPF.

The UPF sends the second packet to the second peer device. The second peer device is connected to the UPF, and is a switching node other than the virtual switching node 1. It is assumed that the second peer device is a switching node 3. The second packet may be an LLDP packet.

The second packet may include the virtual switching node identifier of the virtual switching node 1, the physical port identifier of the physical port corresponding to the virtual switching node 1, the VLAN information and/or CoS information corresponding to the physical port, and port capability information of the physical port.

Step S203b: The second peer device sends second network topology information to the CNC. Correspondingly, the CNC receives the second network topology information from the second peer device.

Optionally, when receiving the second packet from the UPF, the second peer device determines a second connection relationship between a physical port through which the UPF sends the second packet and a port of the second peer device based on the port through which the second packet is received and an identifier of the physical port used by the UPF to send the second packet.

The second peer device constructs the second network topology information based on a switching node identifier of the switching node 3, an identifier of the port used to receive the second packet, and the second packet. The second network topology information includes the virtual switching node identifier of the virtual switching node 1, the physical port identifier of the physical port corresponding to the virtual switching node 1, the switching node identifier of the switching node 3, and the identifier of the port used to receive the second packet.

Optionally, the second network topology information further includes VLAN information and/or CoS information corresponding to a physical port and port capability information of the physical port. Optionally, the second network topology information further includes VLAN information and/or CoS information of the second peer device and port capability information of the second peer device. Optionally, the second network topology information further includes a second connection relationship.

When receiving the first network topology information and/or the second network topology information, the CNC can learn of a topology connection relationship between the virtual switching node 1 and the first peer device and a topology connection relationship between the virtual switching node 1 and the second peer device based on the first network topology information and/or the second network topology information.

In Embodiment 2 shown in FIG. 6, the UE sends the virtual switching node identifier and the virtual port-related information of the virtual switching node 1 to the first peer device through the first packet. The UPF sends the virtual switching node identifier and the physical port-related information of the virtual switching node 1 to the second peer device through the second packet. The first peer device and the second peer device perform topology discovery, to respectively construct the first network topology information and the second network topology information, and respectively send the first network topology information and the second network topology information to the CNC in the TSN system, so that the CNC learns of the topology connection relationship between the virtual switching node 1 and the first peer device and the topology connection relationship between the virtual switching node 1 and the second peer device, thereby facilitating planning by the CNC.

The embodiment shown in FIG. 5 may be combined with the embodiment shown in FIG. 6. For example, the UE constructs the first network topology information and sends the first network topology information to the SMF, the SMF sends the first network topology information to the AF, and the AF reports the first network topology information to the CNC. The UPF sends the second packet to the second peer device, and the second peer device reports the second network topology information to the CNC.

An example in which the embodiments of this application are applied to the schematic diagram of the network architecture shown in FIG. 4b is used. FIG. 7 is a schematic flowchart of an information transmission method according to Embodiment 3 of this application. This embodiment is about obtaining and reporting an association relationship of a port pair. The embodiment shown in FIG. 7 may include but is not limited to the following steps.

Step S301: UE sends a PDU session creation/modification request to an SMF. Correspondingly, the SMF receives the PDU session creation/modification request from the UE.

It should be noted that, in this embodiment of this application, a (R)AN and an AMF between the UE and the SMF are omitted. However, the (R)AN and the AMF actually exist, but are not shown in the figure. For example, the UE sends a PDU session creation request to the AMF through the (R)AN, and the AMF selects an SMF for the PDU session, and then sends the PDU session creation request to the selected SMF.

The PDU session creation/modification request includes a data network name (data network name, DNN) corresponding to the PDU session. A data network indicated by a data network name may correspond to one or more physical ports on a UPF side. The DNN may be used to determine a physical port corresponding to the PDU session on the UPF.

Optionally, the PDU session creation request further includes one or more of VLAN information, CoS information, or traffic class (traffic class) information corresponding to the PDU session. The one or more of the VLAN information, the CoS information, or the traffic class information may be used to determine a physical port corresponding to the PDU session on the UPF. The DNN may be combined with the one or more of the VLAN information, the CoS information, or the traffic class information, and is used to determine a physical port corresponding to the PDU session on the UPF.

The traffic class information may be a traffic class identity, a traffic class value, or the like. A traffic class or traffic class information is a term in a TSN system, and is used to identify a traffic class to which a TSN flow belongs. CoS or CoS information is a term in a layer-2 network, and is used to identify a class of service of a quality of service (quality of service, QoS) flow of a layer-2 packet. The traffic class information may be determined based on the CoS information, and the CoS information may be determined based on the traffic class information, so as to associate a QoS flow in a 5G system with the TSN flow in the TSN system.

When one PDU session corresponds to one virtual port of the UE, one or more of VLAN information, CoS information, or a traffic class corresponding to the PDU session is one or more of VLAN information, CoS information, or a traffic class corresponding to the virtual port of the UE. When the virtual port of the UE is a physical port of the UE, if one PDU session corresponds to a plurality of physical ports of the UE, there may be a plurality of virtual ports of the UE. In this case, the one or more of the VLAN information, the CoS information, or the traffic class corresponding to the PDU session may include VLAN information and/or CoS information corresponding to each virtual port of the UE.

In a possible implementation, the SMF may assign a virtual port identifier to the PDU session.

Step S302: The SMF obtains subscription data from a UDM, where the subscription data includes the one or more of the VLAN information, the CoS information, or the traffic class information corresponding to the PDU session.

Specifically, the SMF sends a subscription data request to the UDM. For example, the subscription data request may include the DNN corresponding to the PDU session and an identifier of the UE, and is used to request subscription data of the UE in a data network indicated by the DNN.

The SMF receives a subscription data response from the UDM. The subscription data response includes subscription data of the UE in a data network indicated by the DNN, and the subscription data may include the one or more of the VLAN information, the CoS information, or the traffic class information corresponding to the PDU session. It may be understood that the subscription data includes one or more of VLAN information, CoS information, or traffic class information subscribed to by the UE in the data network indicated by the DNN, and the one or more of the VLAN information, the CoS information, or the traffic class information that is subscribed to is used as one or more of the VLAN information, the CoS information, or the traffic class corresponding to the PDU session.

If the PDU session creation/modification request in step S301 includes the one or more of the VLAN information, the CoS information, or the traffic class information corresponding to the PDU session, step S302 may not be performed. If the PDU session creation/modification request in step S301 does not include the one or more of the VLAN information, the CoS information, or the traffic class information corresponding to the PDU session, step S302 is performed.

Step S303: The SMF sends a first request to the UPF. Correspondingly, the UPF receives the first request from the SMF.

The first request may be an N4 session creation/modification request. The first request includes the DNN corresponding to the PDU session and the one or more of the VLAN information, the CoS information, or the traffic class information corresponding to the PDU session, so that the UPF determines a physical port corresponding to the PDU session on the UPF.

When the SMF assigns a virtual port identifier to the PDU session, the first request further includes the assigned virtual port identifier, so that the UPF learns of the virtual port identifier corresponding to the PDU session.

Step S304: The UPF determines a physical port identifier corresponding to the PDU session on the UPF.

In a possible implementation, the UPF searches, based on the DNN corresponding to the PDU session and information about a plurality of physical ports configured on the UPF, the physical ports on the UPF for a physical port that can serve a data network indicated by the DNN, and determines an identifier of the physical port as the physical port identifier corresponding to the PDU session. The information about the physical port may include a port bandwidth capability, a maximum rate, CoS information and/or a traffic class, a supported DNN, a VLAN, and the like.

In a possible implementation, the UPF searches, based on the DNN corresponding to the PDU session, the VLAN information corresponding to the PDU session, and information about a plurality of physical ports configured on the UPF, the physical ports on the UPF for a physical port that can serve a data network indicated by the DNN and a VLAN identified by the VLAN information, and determines an identifier of the physical port as the physical port identifier corresponding to the PDU session.

In a possible implementation, the UPF searches, based on the DNN corresponding to the PDU session, the VLAN information corresponding to the PDU session, the CoS information and/or the traffic class information corresponding to the PDU session, and information about a plurality of physical ports configured on the UPF, the physical ports on the UPF for a physical port that can serve a data network indicated by the DNN and a VLAN identified by the VLAN information and that matches the CoS information and/or the traffic class information corresponding to the PDU session, and determines an identifier of the physical port as the physical port identifier corresponding to the PDU session.

In a possible implementation, the UPF searches, based on the DNN corresponding to the PDU session, the CoS information and/or the traffic class information corresponding to the PDU session, and information about a plurality of physical ports configured on the UPF, the physical ports on the UPF for a physical port that can serve a data network indicated by the DNN and that matches the CoS information and/or the traffic class information corresponding to the PDU session, and determines an identifier of the physical port as the physical port identifier corresponding to the PDU session.

It should be noted that there may be one or more physical ports corresponding to the PDU session.

Particularly, when the virtual port of the UE is a physical port of the UE, if one PDU session corresponds to a plurality of physical ports of the UE, there may be a plurality of virtual ports of the UE. The UPF determines a physical port identifier corresponding to each virtual port of the UE on the UPF. For example, a virtual port i is any one of the plurality of virtual ports of the UE, and the UPF searches, based on the DNN corresponding to the PDU session, VLAN information corresponding to the virtual port i, and information about a plurality of physical ports configured on the UPF, the physical ports on the UPF for a physical port that can serve a data network indicated by the DNN and a VLAN identified by the VLAN information, and determines an identifier of the physical port as a physical port identifier corresponding to the virtual port i.

Step S305: The UPF associates the virtual port identifier corresponding to the PDU session with the physical port identifier corresponding to the PDU session, to generate the association relationship of the port pair.

The UPF may assign the virtual port identifier to the PDU session, or may receive the virtual port identifier from the SMF. There are one or more virtual port identifiers corresponding to the PDU session.

When one PDU session corresponds to one virtual port identifier, the UPF or the SMF assigns the virtual port identifier to the PDU session, and the UPF associates the virtual port identifier corresponding to the PDU session with a physical port identifier corresponding to the PDU session, to generate the association relationship of the port pair. In this case, the association relationship of the port pair may be that one virtual port identifier corresponds to one physical port identifier, or one virtual port identifier corresponds to a plurality of physical port identifiers.

When one PDU session corresponds to a plurality of virtual port identifiers, the UPF or the SMF may assign the plurality of virtual port identifiers to the PDU session, and the UPF associates each of the plurality of virtual port identifiers corresponding to the PDU session with a corresponding physical port identifier, to generate the association relationship of the port pair. In this case, the association relationship of the port pair may be that one virtual port identifier corresponds to one physical port identifier, one virtual port identifier corresponds to a plurality of physical port identifiers, or a plurality of virtual port identifiers correspond to a plurality of physical port identifiers.

Optionally, after generating the association relationship of the port pair corresponding to the PDU session, the UPF may directly send the association relationship to the AF, so that the AF sends the association relationship of the port pair corresponding to the PDU session to a CNC in the TSN system.

Step S306: The UPF sends a first response to the SMF. Correspondingly, the SMF receives the first response from the UPF.

The first response may be an N4 session creation/modification response. If the first request is an N4 session creation request, the first response is an N4 session creation response; or if the first request is an N4 session modification request, the first response is an N4 session modification response. The first response includes the association relationship of the port pair, so that the SMF sends the association relationship of the port pair to the AF, and the AF reports the association relationship of the port pair corresponding to the PDU session to the TSN system.

Optionally, when the UPF assigns a virtual port identifier to the PDU session, the first response further includes the assigned virtual port identifier, so that the SMF learns of the virtual port identifier corresponding to the PDU session.

Step S307: The SMF sends a PDU session creation/modification response to the UE. Correspondingly, the UE receives the PDU session creation/modification response from the SMF.

The PDU session creation/modification response includes a virtual port identifier of the UE, so that the UE controls TSN flow transmission on a virtual port identified by the virtual port identifier.

Step S308: The SMF sends the association relationship of the port pair corresponding to the PDU session to the AF. Correspondingly, the AF receives the association relationship of the port pair corresponding to the PDU session from the SMF.

In this embodiment of this application, a sequence of performing step S307 and step S308 is not limited. Step S307 and step S308 may be simultaneously performed, step S307 may be performed before step S308, or the like.

When receiving the first response, the SMF may directly send the association relationship of the port pair corresponding to the PDU session to the AF, or may send the association relationship of the port pair corresponding to the PDU session to the AF through a network element such as a PCF or an NEF.

When one PDU session corresponds to one virtual switching node, the association relationship of the port pair corresponding to the PDU session is an association relationship of a port pair corresponding to the virtual switching node corresponding to the PDU session.

After receiving the association relationship of the port pair corresponding to the PDU session, the AF uses the association relationship of the port pair corresponding to the PDU session as the association relationship of the port pair corresponding to the virtual switching node, and sends the association relationship of the port pair corresponding to the virtual switching node to the CNC in the TSN system, so that the CNC learns of the association relationship of the port pair corresponding to the virtual switching node. Assuming that the PDU session corresponds to a virtual switching node 1, the CNC can learn of an association relationship of a port pair corresponding to the virtual switching node 1.

It should be noted that the AF may not send only the association relationship of the port pair corresponding to the virtual switching node to the CNC, but sends the association relationship of the port pair and delay information of the port pair together to the CNC as port pair information. The embodiment shown in FIG. 7 mainly describes how the UPF determines the association relationship of the port pair. The UPF may send the association relationship of the port pair and the delay information of the port pair together to the AF, and the AF sends the two pieces of information to the CNC as the port pair information. Alternatively, the UPF may first send the association relationship of the port pair to the AF, and then after determining the delay information of the port pair, send the delay information of the port pair to the AF, and the AF sends the two pieces of information to the CNC as the port pair information. Alternatively, the UPF may send the association relationship of the port pair to the AF, and the AF receives the delay information of the port pair from another network element (for example, the SMF or the PCF) or the delay information of the port pair that is determined by the AF, and then sends the two pieces of information to the CNC as the port pair information.

In Embodiment 3 shown in FIG. 7, the UPF generates the association relationship of the port pair corresponding to the PDU session, and sends the association relationship to the SMF, so that the SMF sends the association relationship to the CNC in the TSN system, and the CNC learns of the association relationship of the port pair corresponding to the virtual switching node, thereby facilitating planning by the CNC.

An example in which the embodiments of this application are applied to the schematic diagram of the network architecture shown in FIG. 4b is used. FIG. 8 is a schematic flowchart of an information transmission method according to Embodiment 4 of this application. This embodiment is about obtaining and reporting an association relationship of a port pair. The embodiment shown in FIG. 8 may include but is not limited to the following steps.

Step S401: UE sends a PDU session creation/modification request to an SMF. Correspondingly, the SMF receives the PDU session creation/modification request from the UE.

Step S401 is the same as step S301. For details, refer to the specific descriptions of step S301. Details are not described herein again. Particularly, when a virtual port on a UE side is a physical port on the UE side, and a plurality of physical ports on the UE side may correspond to one PDU session, the UE may further send a quantity of physical ports on the UE side to the SMF, so that the SMF, a UPF, or an AF assigns a virtual port identifier to the physical port on the UE side. The quantity of physical ports on the UE side may be sent to the SMF through the PDU session creation/modification request, or may be sent to the SMF independently of the PDU session creation/modification request. Optionally, the UE further sends a port identifier of each physical port on the UE side to the SMF. Optionally, if the physical ports on the UE side are different in one or more of VLAN information, CoS information, or traffic class information, the UE further sends the one or more of the VLAN information, the CoS information, or the traffic class information corresponding to each physical port on the UE side to the SMF.

Optionally, if the SMF receives the quantity of physical ports on the UE side, the SMF may assign the virtual port identifier to the PDU session based on the quantity of physical ports on the UE side. For example, if the quantity of physical ports on the UE side is 3, the SMF assigns three virtual port identifiers to the PDU session. If the SMF receives a port identifier of each physical port on the UE side, after the SMF assigns the virtual port identifier to the PDU session, one physical port on the UE side has two identifiers. One identifier is a virtual identifier, and the other identifier is a physical identifier. The two identifiers may identify a same physical port.

Step S402: The SMF obtains subscription data from a UDM, where the subscription data includes one or more of VLAN information, CoS information, or traffic class information corresponding to the PDU session.

Step S402 is the same as step S302. For details, refer to the specific descriptions of step S302. Details are not described herein again.

Step S403: The SMF sends a first request to the UPF. Correspondingly, the UPF receives the first request from the SMF.

The first request may be an N4 session creation/modification request. The first request may be used to request the UPF to assign a virtual port identifier to the PDU session. Particularly, if the UE sends the quantity of physical ports on the UE side to the SMF, the SMF further sends the quantity of physical ports on the UE side to the UPF.

The first request may include a DNN corresponding to the PDU session and one or more of VLAN information, CoS information, or traffic class information corresponding to the PDU session. Particularly, if the PDU session of the UE corresponds to a plurality of physical ports on the UE side, and the physical ports on the UE side are different in one or more of VLAN information, CoS information, or traffic class information, the first request may include the one or more of the VLAN information, the CoS information, or the traffic class information corresponding to each physical port on the UE side corresponding to the PDU session.

Step S404: The UPF assigns a virtual port identifier to the PDU session.

When receiving the first request, the UPF assigns the virtual port identifier to the PDU session. If the UPF receives the quantity of physical ports on the UE side, the UPF may assign the virtual port identifier to the PDU session based on the quantity of physical ports on the UE side. For example, if the quantity of physical ports on the UE side is 3, the UPF assigns three virtual port identifiers to the PDU session. If the UPF receives a port identifier of each physical port on the UE side, after the UPF assigns the virtual port identifier to the PDU session, one physical port on the UE side has two identifiers. One identifier is a virtual identifier, and the other identifier is a physical identifier. The two identifiers may identify a same physical port.

Step S405: The UPF sends a first response to the SMF. Correspondingly, the SMF receives the first response from the UPF.

The first response includes a virtual port identifier assigned by the UPF. If the UPF assigns a plurality of virtual port identifiers, the first response includes the plurality of virtual port identifiers. Optionally, the first response includes a correspondence between a virtual port identifier and a physical port on the UE side. For example, when the physical ports on the UE side are different in one or more of VLAN information, CoS information, or traffic class information, the UPF generates a virtual port identifier for each physical port on the UE side, and sends the virtual port identifier corresponding to each physical port to the SMF.

It should be noted that, if the SMF assigns the virtual port identifier to the PDU session, step S403 to step S405 may not be performed.

Step S406: The SMF generates the association relationship of the port pair based on the DNN corresponding to the PDU session and the virtual port identifier corresponding to the PDU session.

When the UPF reports, to the AF through the SMF, physical port information configured on the UPF, the SMF may learn of the physical port information configured on the UPF. For a manner in which the SMF determines, based on the DNN corresponding to the PDU session, a physical port identifier corresponding to the PDU session, refer to the several manners in which the UPF determines the physical port identifier corresponding to the PDU session in step S304.

The SMF generates the association relationship of the port pair corresponding to the PDU session. For details, refer to step S305 in which the UPF generates the association relationship of the port pair corresponding to the PDU session.

Step S407: The SMF sends a PDU session creation/modification response to the UE. Correspondingly, the UE receives the PDU session creation/modification response from the SMF.

The PDU session creation/modification response includes one or more virtual port identifiers of the UE. If a plurality of virtual port identifiers are included, and the physical ports on the UE side are different in one or more of VLAN information, CoS information, or traffic class information, the UE may establish, based on a physical port identified by the virtual port identifier, and one or more of VLAN information, CoS information, or traffic class information corresponding to the physical port, a correspondence between each virtual port identifier and one or more of VLAN information, CoS information, or traffic class information.

When the PDU session creation/modification response includes one or more virtual port identifiers of the UE, optionally, the SMF sends a correspondence between an assigned virtual port identifier and a physical port on the UE side to the UE, that is, the SMF sends the virtual port identifier corresponding to the physical port on the UE side to the UE.

When the SMF obtains, from the subscription data, the one or more of the VLAN information, the CoS information, or the traffic class information corresponding to the PDU session, optionally, the SMF sends the one or more of the VLAN information, the CoS information, or the traffic class information corresponding to the PDU session to the UE. If the PDU session corresponds to a plurality of physical ports on the UE side, optionally, the SMF sends one or more of VLAN information, CoS information, or traffic class information corresponding to each physical port or virtual port to the UE.

Step S408: The SMF sends the association relationship of the port pair corresponding to the PDU session to the AF. Correspondingly, the AF receives the association relationship of the port pair corresponding to the PDU session from the SMF.

Step S408 is the same as step S308. For details, refer to the specific descriptions of step S308. Details are not described herein again.

The process described in step S401 to step S408 is a process in which the SMF determines the association relationship of the port pair corresponding to the PDU session and sends the association relationship to the AF.

The AF may determine the association relationship of the port pair corresponding to the PDU session in the following two manners.

Manner 1: After step S405, the method further includes step S406a: The SMF sends a first message to the AF. Correspondingly, the AF receives the first message from the SMF.

In a possible implementation, the first message includes the virtual port identifier of the UE, the physical port information of the UPF, the DNN corresponding to the PDU session, and the one or more of the VLAN information, the CoS information, or the traffic class information corresponding to the PDU session. The virtual port identifier of the UE is a virtual port identifier assigned by the SMF or the UPF to the PDU session. The physical port information of the UPF is physical port information configured on the UPF and reported by the UPF to the AF through the SMF, and includes a port bandwidth capability, a maximum rate, CoS information and/or a traffic class, a supported DNN, a VLAN, and the like. If the UPF reports, to the AF in advance, the physical port information configured on the UPF, the first message may not include the physical port information of the UPF.

In a possible implementation, the first message includes the physical port information of the UPF, the DNN corresponding to the PDU session, and the one or more of the VLAN information, the CoS information, or the traffic class information corresponding to the PDU session. If the UPF reports, to the AF in advance, the physical port information configured on the UPF, the first message may not include the physical port information of the UPF. In this case, the first message does not include the virtual port identifier assigned by the SMF or the UPF to the PDU session. Therefore, when receiving the first message, the AF may assign the virtual port identifier to the PDU session.

Manner 2: After step S405, the method further includes step S406b: The UPF sends a second message to the AF. Correspondingly, the AF receives the response message from the UPF. The second message sent by the UPF to the AF may be directly sent by the UPF to the AF, or may be sent by the UPF to the SMF and then sent by the SMF to the AF.

The second message includes the virtual port identifier of the UE, the physical port information of the UPF, the DNN corresponding to the PDU session, and the one or more of the VLAN information, the CoS information, or the traffic class information corresponding to the PDU session. The virtual port identifier of the UE is a virtual port identifier assigned by the UPF to the PDU session. If the UPF does not assign a virtual port identifier to the PDU session, the second message does not include the virtual port identifier of the UE, and when receiving the second message, the AF may assign a virtual port identifier to the PDU session. If the UPF reports, to the AF in advance, the physical port information configured on the UPF, the second message may not include the physical port information of the UPF. The UPF may obtain, from the first request, the DNN corresponding to the PDU session and the one or more of the VLAN information, the CoS information, or the traffic class information corresponding to the PDU session that are included in the second message.

Either step S406a or step S406b needs to be performed. In another possible implementation, step S405a and step S406b are performed. However, in this manner, content included in the first message and content included in the second message are different from those in step S405a and step S406b. For example, the first message includes the virtual port identifier of the UE, the DNN corresponding to the PDU session, and the one or more of the VLAN information, the CoS information, or the traffic class information corresponding to the PDU session, and the second message includes the physical port information of the UPF.

After step S405a and step S406b, the method further includes step S407c: The AF generates the association relationship of the port pair corresponding to the PDU session. For details of generating, by the AF, the association relationship of the port pair corresponding to the PDU session, refer to step S305 in which the UPF generates the association relationship of the port pair corresponding to the PDU session. After generating the association relationship of the port pair corresponding to the PDU session, the AF sends the association relationship of the port pair corresponding to the PDU session to the CNC in the TSN system as an association relationship of a port pair corresponding to a virtual switching node, so that the CNC learns of the association relationship of the port pair corresponding to the virtual switching node.

In Embodiment 4 shown in FIG. 8, the SMF or the AF generates the association relationship of the port pair corresponding to the PDU session, so that the AF sends the association relationship of the port pair corresponding to the PDU session to the CNC in the TSN system as the association relationship of the port pair corresponding to the virtual switching node, and the CNC learns of the association relationship of the port pair corresponding to the virtual switching node, thereby facilitating planning by the CNC.

An example in which the embodiments of this application are applied to the schematic diagram of the network architecture shown in FIG. 4b is used. FIG. 9 is a schematic flowchart of an information transmission method according to Embodiment 5 of this application. This embodiment is about obtaining and reporting delay information of a port pair. The embodiment shown in FIG. 9 may include but is not limited to the following steps.

Step S501: UE sends a PDU session creation/modification request to an SMF. Correspondingly, the SMF receives the PDU session creation/modification request from the UE.

Step S501 is the same as step S301. For details, refer to the specific descriptions of step S301. Details are not described herein again.

Step S502: The SMF sends a first message to a PCF. Correspondingly, the PCF receives the first message from the SMF.

The first message may be a session management policy creation message, for example, a session management policy creation request, and is used to request the PCF to create a management policy for the PDU session. The first message may include a PDU session identity of the PDU session, so that the PCF learns of the PDU session corresponding to creation of the management policy.

Optionally, if the SMF determines an association relationship of a port pair corresponding to the PDU session, the first message further includes the association relationship of the port pair corresponding to the PDU session.

Step S503: The PCF determines delay information of the port pair.

In a 5G system, a PDU session may have a plurality of QoS flows, and different QoS flows correspond to different delay requirements, that is, different service flows correspond to different delay requirements. The 5G system defines a packet delay budget (packet delay budget, PDB), which is used to limit a maximum delay budget of a QoS flow between the UE, a (R)AN, and the UPF. The PCF generates QoS configuration information of each node in the 5G system, where the QoS configuration information includes a PDB, and then delivers the QoS configuration information to the UE, the (R)AN, and the UPF. Then, when the UE, the (R)AN, and the UPF forward a QoS flow corresponding to the QoS configuration information, a transmission delay of the QoS flow is less than the PDB due to a limitation of the PDB.

In the 5G system, a 5G QoS identity (5G QoS identity, 5QI) is used to distinguish between different QoS flows. In other words, the 5QI is used to identify a 5G QoS flow.

The PCF determines the delay information of the port pair, and specifically determines delay information of a port pair corresponding to a virtual switching node 1, that is, determines delay information of a port pair corresponding to a PDU session created/modified by the UE. In this embodiment of this application, a PDB corresponding to a QoS flow of the PDU session is used as the delay information of the port pair.

When receiving the first message, the PCF obtains subscription data of the PDU session of the UE. The PCF may obtain the subscription data of the PDU session from a UDM, or the subscription data of the PDU session is stored in local configuration information of the PCF. The subscription data includes a 5QI of the QoS flow of the PDU session. A correspondence between each QoS flow of the PDU session and a PDB is configured on the PCF. In other words, there is a correspondence between each 5QI and a PDB. A PDB corresponding to the 5QI included in the subscription data may be obtained based on the correspondence. The PDB corresponding to the 5QI included in the subscription data is the PDB corresponding to the QoS flow of the PDU session, that is, the delay information of the port pair.

The PCF further determines traffic class information corresponding to the delay information of the port pair. In this embodiment of this application, traffic class information corresponding to the QoS flow of the PDU session is used as the traffic class information corresponding to the delay information of the port pair. The traffic class information corresponding to the QoS flow of the PDU session is traffic class information corresponding to the 5QI included in the subscription data. When the PCF determines the traffic class information corresponding to the delay information of the port pair, the delay information of the port pair is used as the delay information corresponding to the traffic class information of the port pair.

The PCF may determine the traffic class information corresponding to the QoS flow of the PDU session in the following two manners.

Manner 1: A mapping relationship between each 5QI and traffic class information is configured on the PCF. The PCF searches, based on the 5QI included in the subscription data, the mapping relationship for the traffic class information corresponding to the 5QI, to determine the traffic class information corresponding to the QoS flow of the PDU session.

Manner 2: The subscription data of the PDU session includes the 5QI of the QoS flow of the PDU session and the traffic class information corresponding to the 5QI. The PCF may directly determine, based on the subscription data of the PDU session, the traffic class information corresponding to the QoS flow of the PDU session.

Step S504: The PCF sends a second message to an AF. Correspondingly, the AF receives the first message from the PCF.

The second message may be an Rx session creation message. The second message may include the delay information of the port pair, so that the AF learns of the delay information of the port pair.

When the PCF determines the traffic class information corresponding to the delay information of the port pair, the second message further includes the traffic class information corresponding to the delay information of the port pair, so that the AF learns of the traffic class information corresponding to the delay information of the port pair. After learning of the traffic class information corresponding to the delay information of the port pair, the AF reports the delay information corresponding to the traffic class information of the port pair to a CNC in a TSN system.

The second message further includes a 5QI corresponding to the delay information of the port pair, and the 5QI corresponding to the delay information of the port pair is the 5QI included in the subscription data, so that the AF determines, based on the 5QI, the traffic class information corresponding to the delay information of the port pair.

When learning of the traffic class information and/or the 5QI corresponding to the delay information of the port pair, the AF may determine the delay information of the port pair based on the traffic class and/or the 5QI. Specifically, a correspondence between a 5QI and a PDB is configured on the AF, so as to determine a PDB corresponding to the 5QI, and determine the PDB as the delay information of the port pair. A mapping relationship between a 5QI and traffic class information is further configured on the AF, so as to determine a 5QI corresponding to the class of traffic, further determine a PDB corresponding to the 5QI, and determine the PDB as the delay information of the port pair.

When the first message includes the association relationship of the port pair corresponding to the PDU session, the second message further includes the association relationship of the port pair corresponding to the PDU session, so that the AF learns of the association relationship of the port pair corresponding to the PDU session, and reports the association relationship of the port pair corresponding to the virtual switching node and the delay information of the port pair to the CNC in the TSN system.

If the first message does not include the association relationship of the port pair corresponding to the PDU session, step S505 to step S508 are performed. For a specific implementation process of step S505 to step S507, refer to the specific descriptions of step S403 to step S405 in the embodiment shown in FIG. 8. Details are not described herein again.

Step S505: The SMF sends a first request to the UPF. Correspondingly, the UPF receives the first request from the SMF.

Step S508: The UPF assigns a virtual port identifier to the PDU session.

Step S507: The UPF sends a first response to the SMF. Correspondingly, the SMF receives the first response from the UPF.

Step S508: The SMF sends a third message to the PCF. Correspondingly, the PCF receives the third message from the SMF.

The third message may be a session management policy modification message, for example, a session management policy modification request, and is used to request the PCF to modify a management policy for the PDU session. The third message includes the association relationship of the port pair corresponding to the PDU session, so that the PCF learns of the association relationship of the port pair corresponding to the PDU session, and reports the association relationship of the port pair corresponding to the PDU session to the AF.

Step S509: The PCF sends a fourth message to the AF. Correspondingly, the AF receives the fourth message from the PCF.

The fourth message may be an Rx session modification message. The fourth message may include the association relationship of the port pair corresponding to the PDU session, so that the AF learns of the association relationship of the port pair corresponding to the PDU session.

In a possible implementation, after determining the delay information of the port pair and the traffic class information corresponding to the delay information of the port pair, the PCF may send the second message to the AF, and after determining the association relationship of the port pair corresponding to the PDU session, send the fourth message including the association relationship of the port pair corresponding to the PDU session to the AF. In other words, in this manner, the second message and the fourth message are separately sent.

In a possible implementation, after determining the delay information of the port pair and the traffic class information corresponding to the delay information of the port pair, the PCF may not send the second message, that is, may not perform step S504, and after determining the association relationship of the port pair corresponding to the PDU session, sends the fourth message to the AF. In this case, the fourth message includes the association relationship of the port pair corresponding to the PDU session, the delay information of the port pair, and the traffic class information corresponding to the delay information of the port pair.

After receiving the association relationship of the port pair corresponding to the PDU session, the delay information of the port pair, and the traffic class information corresponding to the delay information of the port pair, the AF sends, to the CNC in the TSN system, the association relationship of the port pair corresponding to the PDU session, the delay information of the port pair, and the traffic class information corresponding to the delay information of the port pair.

In a possible implementation, after determining the delay information of the port pair and the 5QI corresponding to the delay information of the port pair, the PCF may send the fourth message to the AF. In this case, the fourth message includes the association relationship of the port pair corresponding to the PDU session, the delay information of the port pair, and the 5QI corresponding to the delay information of the port pair.

After receiving the association relationship of the port pair corresponding to the PDU session, the delay information of the port pair, and the 5QI corresponding to the delay information of the port pair, the AF determines, based on a fixed or configured correspondence between a 5QI and traffic class information, the traffic class information corresponding to the delay information of the port pair, and sends, to the CNC in the TSN system, the association relationship of the port pair corresponding to the PDU session, the delay information of the port pair, and the traffic class information of the delay information of the port pair.

Step S510: The SMF sends a PDU session creation/modification response to the UE. Correspondingly, the UE receives the PDU session creation/modification response from the SMF.

A sequence of performing step S508 and step S510 is not limited in this embodiment of this application.

Step S510 is the same as step S308. For details, refer to the specific descriptions of step S308. Details are not described herein again.

The process described in step S501 to step S509 is a process in which the PCF determines the delay information of the port pair and sends the delay information to the AF, so that the AF sends the delay information of the port pair to the CNC in the TSN system, and the CNC creates/modifies a forwarding policy for a TSN flow based on the delay information of the port pair.

In a possible implementation, the UPF may also determine the delay information of the port pair and send the delay information to the AF, so that the AF sends the delay information of the port pair to the CNC in the TSN system, and the CNC creates/modifies a forwarding policy for a TSN flow based on the delay information of the port pair.

After step S503, the method further includes step S503a: The PCF sends a session management policy creation/modification response to the SMF, where the session management policy creation/modification response includes the 5QI included in the subscription data. Optionally, the PCF sends, to the SMF, a mapping relationship between a 5QI and traffic class information or traffic class information corresponding to the 5QI.

The first request in step S505 further includes the 5QI included in the subscription data, and optionally includes a mapping relationship between a 5QI and traffic class information or traffic class information corresponding to the 5QI. After step S505, the method further includes step S505a: The UPF determines the traffic class information corresponding to the delay information of the port pair. A sequence of performing step S505a and step S506 is not limited. Specifically, a correspondence between each QoS flow of the PDU session and a PDB is configured on the UPF, and a PDB corresponding to the 5QI included in the subscription data may be obtained based on the correspondence. In step S505a, the UPF may further determine the traffic class information corresponding to the QoS flow of the PDU session. Specifically, a mapping relationship between each 5QI and traffic class information is configured on the UPF. In this case, the UPF may determine the traffic class information corresponding to the QoS flow of the PDU session. Alternatively, the first request in step S505 includes traffic class information corresponding to the 5QI, so that the UPF directly determines, based on the first request, the traffic class information corresponding to the delay information of the port pair. Alternatively, the first request in step S505 includes a mapping relationship between a 5QI and traffic class information, so that the UPF determines, based on the 5QI of the QoS flow of the PDU session, the traffic class information corresponding to the delay information of the port pair.

After determining the delay information of the port pair, the UPF performs step S511: The UPF sends the delay information of the port pair to the AF. Optionally, the UPF further sends the association relationship of the port pair corresponding to the PDU session to the AF. The UPF may simultaneously send the delay information of the port pair and the association relationship of the port pair corresponding to the PDU session, or the UPF may first send the association relationship of the port pair corresponding to the PDU session to the AF, and after determining the delay information of the port pair, send the delay information of the port pair to the AF. After the UPF determines the traffic class information corresponding to the delay information of the port pair, the UPF sends the traffic class information corresponding to the delay information of the port pair to the AF while sending the delay information of the port pair. Alternatively, after the UPF determines the 5QI corresponding to the delay information of the port pair, the UPF sends the 5QI corresponding to the delay information of the port pair to the AF while sending the delay information of the port pair. After receiving the delay information of the port pair and the corresponding 5QI, the AF performs a similar operation to that in step S509 of determining the traffic class information corresponding to the delay of the port pair. It should be noted that a prerequisite for performing step S511 is that there is a direct interface between the UPF and the AF. Otherwise, a message between the UPF and the AF needs to be forwarded through the SMF.

An example in which the embodiments of this application are applied to the schematic diagram of the network architecture shown in FIG. 4b is used. FIG. 10 is a schematic flowchart of an information transmission method according to Embodiment 6 of this application. This embodiment is about obtaining and reporting delay information of a port pair. For parts in the embodiment shown in FIG. 10 that are the same as or of a same type as those in FIG. 9, refer to the specific descriptions of corresponding parts in FIG. 9. The embodiment shown in FIG. 10 may include but is not limited to the following steps.

Step S601: UE sends a PDU session creation/modification request to an SMF. Correspondingly, the SMF receives the PDU session creation/modification request from the UE.

Step S602: The SMF sends a second request to a PCF. Correspondingly, the PCF receives the second request from the SMF.

The second request may be a session management creation/modification request, and is used to request the PCF to create/modify a management policy for the PDU session. The second request may include a PDU session identity of the PDU session, so that the PCF learns of the PDU session corresponding to the creation/modification management policy. When receiving the second request, the PCF obtains subscription data of the PDU session, and the subscription data includes a 5QI and/or traffic class information of a QoS flow of the PDU session. The PCF determines a PDB corresponding to the 5QI, and optionally determines traffic class information corresponding to the 5QI. For details, refer to the specific descriptions of step S503. Details are not described herein again.

Step S603: The PCF sends a second response to the SMF. Correspondingly, the SMF receives the second response from the PCF.

After determining the PDB corresponding to the 5QI, the PCF sends the second response to the SMF. The second response includes the 5QI and the PDB corresponding to the 5QI. Optionally, the second response further includes the traffic class information corresponding to the 5QI. The second response may be a session management creation/modification response.

If a mapping relationship between each 5QI and traffic class information is configured on the SMF, when receiving the 5QI from the PCF, the SMF may determine the traffic class information corresponding to the 5QI. In this case, the second response may not carry the traffic class information corresponding to the 5QI. Alternatively, a correspondence between the 5QI and the traffic class information is fixed, and the second response may not carry the traffic class information corresponding to the 5QI.

Step S604: The SMF sends a first request to a UPF. Correspondingly, the UPF receives the first request from the SMF.

The first request may be an N4 session creation/modification request, and may include the 5QI and the PDB corresponding to the 5QI, and optionally, may further include the traffic class information corresponding to the 5QI.

If a mapping relationship between each 5QI and traffic class information is configured on the UPF, when receiving the 5QI from the SMF, the UPF may determine the traffic class information corresponding to the 5QI. In this case, the first request may not carry the traffic class information corresponding to the 5QI. Alternatively, a correspondence between the 5QI and the traffic class information is fixed, and the first request may not carry the traffic class information corresponding to the 5QI.

Step S605: The UPF determines an association relationship of the port pair corresponding to the PDU session and the delay information of the port pair.

For details of determining, by the UPF, the association relationship of the port pair corresponding to the PDU session, refer to the specific descriptions in the embodiment shown in FIG. 7. Details are not described herein again. In the embodiment shown in FIG. 8, after determining the association relationship of the port pair corresponding to the PDU session, the SMF may notify the UPF of the association relationship, so that the UPF learns of the association relationship of the port pair corresponding to the PDU session.

For details of determining, by the UPF, the delay information of the port pair, refer to the specific descriptions in the embodiment shown in FIG. 9. Details are not described herein again. The UPF may further determine traffic class information and/or a 5QI corresponding to the delay information of the port pair.

Step S606: The UPF sends the port pair information to the AF. Correspondingly, the AF receives the port pair information from the UPF.

The port pair information includes the association relationship of the port pair and the delay information of the port pair. In this embodiment of this application, the port pair information that corresponds to the PDU session created/modified by the UE is port pair information corresponding to a virtual switching node 1.

The UPF may directly send the port pair information to the AF, or may first send the port pair information to the SMF, and then the SM sends the port pair information to the AF.

It should be noted that step S605 is an optional step, and step S606 is performed only when step S605 is performed. If step S605 is not performed, the SMF determines the delay information of the port pair and reports the delay information to the AF.

Step S607: The UPF sends a first response to the SMF. Correspondingly, the SMF receives the first response from the UPF.

The first response may be an N4 session creation/modification response.

Step S608: The SMF determines the association relationship of the port pair corresponding to the PDU session and the delay information of the port pair.

For details of determining, by the SMF, the association relationship of the port pair corresponding to the PDU session, refer to the specific descriptions in the embodiment shown in FIG. 8. Details are not described herein again. In the embodiment shown in FIG. 7, after determining the association relationship of the port pair corresponding to the PDU session, the UPF may notify the SMF of the association relationship, so that the SMF learns of the association relationship of the port pair corresponding to the PDU session.

For details of determining, by the SMF, the delay information of the port pair, refer to details of determining, by the PCF or the UPF, the delay information of the port pair in the embodiment shown in FIG. 9. The SMF may alternatively determine the delay information of the port pair by receiving the delay information of the port pair from the PCF or the UPF. The SMF may further determine the traffic class information and/or the 5QI corresponding to the delay information of the port pair.

Step S609: The SMF sends the port pair information to the AF. Correspondingly, the AF receives the port pair information from the SMF.

The port pair information includes the association relationship of the port pair and the delay information of the port pair.

Optionally, the SMF sends the 5QI and/or the traffic class information corresponding to the delay information of the port pair to the AF, so that the AF determines the traffic class information corresponding to the delay of the port pair. A specific method for determining the delay information of the port pair by the AF is the same as that described in step S504.

Step S610: The SMF sends a PDU session creation/modification response to the UE. Correspondingly, the UE receives the PDU session creation/modification response from the SMF.

In the embodiment shown in FIG. 10, an occasion and a sequence of performing step S606 and step S609 relative to other steps are not limited.

In Embodiment 6 shown in FIG. 10, the UPF or the SMF may determine the delay information of the port pair, and report the delay information to the AF, so that the AF sends the delay information of the port pair to a CNC in a TSN system, and the CNC reserves a transmission resource for a TSN flow based on the delay information of the port pair.

In a possible implementation, the AF may also determine the delay information of the port pair, so that the AF sends the delay information of the port pair to the CNC in the TSN system.

When sending the port pair information corresponding to the PDU session to the AF, the PCF/SMF/UPF may further send the traffic class information and/or the 5QI corresponding to the port pair information to the AF, so that the AF determines the delay information corresponding to the traffic class information of the port pair, and sends the delay information to the CNC in the TSN system. For example, the traffic class information and/or the PDB corresponding to the 5QI are/is fixed or configured on the AF, so that the AF determines, based on the traffic class information and/or the 5QI corresponding to the port pair information, the delay information corresponding to the traffic class information of the port pair.

When sending a virtual port identifier of the UE to the AF, the PCF/SMF/UPF may further send traffic class information and/or a 5QI corresponding to the virtual port identifier to the AF, so that the AF determines the delay information corresponding to the traffic class information of the port pair, and sends the delay information to the CNC in the TSN system. For example, the AF determines the association relationship of the port pair based on the port pair information of the virtual switching node. In addition, the traffic class information and/or the PDB corresponding to the 5QI are/is fixed or configured on the AF, so that the AF determines, based on the traffic class information and/or the 5QI corresponding to the virtual port identifier, the traffic class information and/or the 5QI corresponding to the port pair, and determines the delay information corresponding to the traffic class information of the port pair.

It should be noted that the port pair information reported by the AF to the CNC includes the association relationship of the port pair of the virtual switching node and the delay information corresponding to the traffic class information of the port pair. In this embodiment of this application, the AF reports the delay information of the port pair to the CNC as the delay information corresponding to the traffic class information of the port pair, and reports the traffic class information corresponding to the delay information of the port pair, so that the CNC learns that the delay information of the port pair is the delay information corresponding to the traffic class information of the port pair.

It should be noted that the AF may not send only the association relationship of the port pair corresponding to the virtual switching node or the delay information of the port pair to the CNC, but sends the association relationship of the port pair and the delay information of the port pair together to the CNC as the port pair information. In this embodiment of this application, the UPF, the SMF, or the AF may determine the association relationship of the port pair corresponding to the virtual switching node, and the PCF, the UPF, the SMF, the UPF, or the AF may determine the delay information of the port pair corresponding to the virtual switching node. A network element that determines the association relationship of the port pair and a network element that determines the delay information of the port pair may be randomly combined, and finally the AF sends the port pair information to the CNC. However, the network element that first determines the association relationship of the port pair needs to send the association relationship of the port pair to another network element, and then the network element that receives the association relationship of the port pair determines the delay information of the port pair. For example, the SMF first determines the association relationship of the port pair, and then the SMF sends the association relationship to the PCF. The PCF determines the delay information of the port pair, and then the PCF sends the port pair information to the AF.

If the network element that determines the association relationship of the port pair and the network element that determines the delay information of the port pair are a same network element, the network element may send the association relationship of the port pair and the delay information of the port pair together to the AF as the port pair information. For example, the network element is the SMF. The SMF may send the association relationship of the port pair and the delay information of the port pair together to the AF as the port pair information. The SMF may directly send the port pair information to the AF, or may forward the port pair information to the AF through the PCF or an NEF. Alternatively, the association relationship of the port pair and the delay information of the port pair may not be sent simultaneously.

The foregoing describes in detail the methods in the embodiments of this application. The following provides apparatuses in the embodiments of this application.

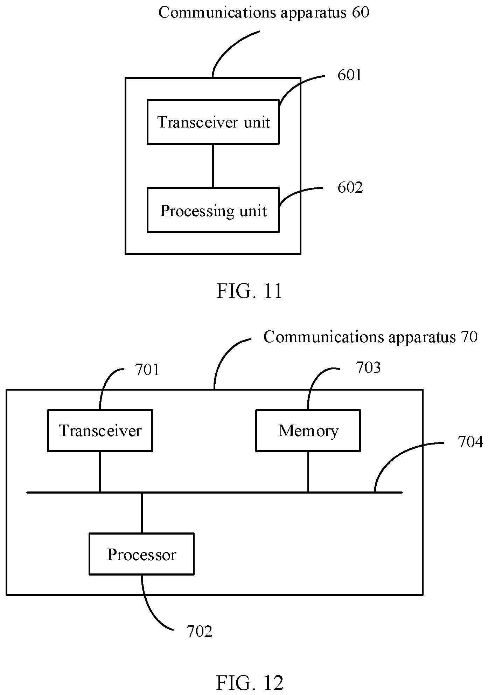

FIG. 11 is a schematic diagram of a logical structure of a communications apparatus according to an embodiment of this application. The communications apparatus 60 may include a transceiver unit 601 and a processing unit 602. The communications apparatus 60 is an information transmission apparatus, and may be an application function network element, or may be a session management network element.

A case in which the communications apparatus 60 is the application function network element is as follows:
The processing unit 602 is configured to: in a process in which a user terminal creates/modifies a PDU session between the user terminal and a user plane function network element, determine an association relationship of a port pair corresponding to the PDU session; and determine delay information of the port pair.

The transceiver unit 601 is configured to send port pair information to a time sensitive networking, where the port pair information includes the association relationship of the port pair and the delay information of the port pair.

When the communications apparatus 60 is the application function network element, functions of the AF in the embodiments shown in FIG. 5 to FIG. 10 may be implemented. For detailed processes performed by the units in the communications apparatus 60, refer to the steps performed by the AF in the embodiments shown in FIG. 5 to FIG. 10. Details are not described herein again.

A case in which the communications apparatus 60 is the session management network element is as follows:
In a possible implementation, the processing unit 602 is configured to determine an association relationship of a port pair corresponding to a PDU session. The transceiver unit 601 is configured to send the association relationship of the port pair. The processing unit 602 is further configured to determine delay information of the port pair. The transceiver unit 601 is further configured to send the delay information of the port pair.

In a possible implementation, the transceiver unit 601 is configured to: receive first network topology information of a virtual switching node, and receive second network topology information of the virtual switching node; and send the first network topology information and the second network topology information to an application function network element in the virtual switching node.

When the communications apparatus 60 is the session management network element, functions of the SMF in the embodiments shown in FIG. 5 to FIG. 10 may be implemented. For detailed processes performed by the units in the communications apparatus 60, refer to the steps performed by the SMF in the embodiments shown in FIG. 5 to FIG. 10. Details are not described herein again.

FIG. 12 is a simplified schematic diagram of a physical structure of a communications apparatus according to an embodiment of this application. The communications apparatus 70 is an information transmission apparatus, and may be an application function network element, or may be a session management network element.

The communications apparatus 70 includes a transceiver 701, a processor 702, and a memory 703. The transceiver 701, the processor 702, and the memory 703 may be connected to each other through a bus 704, or may be connected to each other in another manner. A related function implemented by the transceiver unit 601 shown in FIG. 11 may be implemented by the transceiver 701. A related function implemented by the processing unit 602 shown in FIG. 11 may be implemented by one or more processors 702.

The memory 703 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 703 is configured to store a related instruction and related data.

The transceiver 701 is configured to: send data and/or signaling, and receive data and/or signaling.

If the communications apparatus 70 is the AF in the embodiments shown in FIG. 5 to FIG. 10, the transceiver 701 may be configured to communicate with the UPF, the SMF, and the CNC, for example, perform step S105 in the embodiment shown in FIG. 5, perform step S308 in the embodiment shown in FIG. 7, perform step S406a, step S406b, and step S408 in the embodiment shown in FIG. 8, and perform step S504, step S509, and step S511 in the embodiment shown in FIG. 10.

If the communications apparatus 70 is the SMF in the embodiments shown in FIG. 5 to FIG. 10, the transceiver 701 may be configured to communicate with the AMF, the UPF, and the AF, for example, perform step S103a, step S103b, and step S105 in the embodiment shown in FIG. 5, perform step S303, step S306, and step S308 in the embodiment shown in FIG. 7, perform step S403, step S405, step S406a, and step S408 in the embodiment shown in FIG. 8, perform step S505, step S507, and step S508 in the embodiment shown in FIG. 9, and perform step S602, step S603, step S604, step S607, and step S609 in the embodiment shown in FIG. 10.

There may be one or more processors 702, for example, one or more central processing units (central processing unit, CPU). When the processor 702 is one CPU, the CPU may be a single-core CPU or a multi-core CPU.

If the communications apparatus 70 is the AF in the embodiments shown in FIG. 5 to FIG. 10, the processor 702 may be configured to control the AF, for example, perform step S407c in the embodiment shown in FIG. 8.

If the communications apparatus 70 is the SMF in the embodiments shown in FIG. 6 and FIG. 10, the processor 702 may be configured to control the SMF, for example, perform step S406 in the embodiment shown in FIG. 8, and perform step S608 in the embodiment shown in FIG. 10.

The memory 703 is configured to store program code and data of the communications apparatus 70.

For details of the steps performed by the processor 702 and the transceiver 701, refer to the descriptions in the embodiments shown in FIG. 5 to FIG. 10. Details are not described herein again.

It may be understood that FIG. 12 merely shows a simplified design of the communications apparatus. In actual application, the communications apparatus may further include other necessary components, including but not limited to any quantity of transceivers, processors, controllers, memories, communications units, and the like. All devices capable of implementing this application fall within the protection scope of this application.

An embodiment of this application further provides an information transmission system. The information transmission system may include an application function network element and a session management network element. The application function network element and the session management network element may be configured to implement functions of the AF and the SMF in the embodiments shown in FIG. 5 to FIG. 10. For details, refer to the specific implementation processes of the AF and the SMF in FIG. 5 to FIG. 10.

The information transmission system further includes a user plane function network element. The user plane function network element may be configured to implement functions of the UPF in the embodiments shown in FIG. 5 to FIG. 10. For details, refer to the specific implementation processes of the UPF in FIG. 5 to FIG. 10.

The information transmission system further includes a policy management network element. The policy management network element may be configured to implement functions of the PCF in the embodiments shown in FIG. 5 to FIG. 10. For details, refer to the specific implementation processes of the PCF in FIG. 5 to FIG. 10.

The information transmission system further includes a user terminal. The user terminal may be configured to implement functions of the UE in the embodiments shown in FIG. 5 to FIG. 10. For details, refer to the specific implementation processes of the UE in FIG. 5 to FIG. 10.

A person of ordinary skill in the art may understand that all or some of the procedures of the methods in the foregoing embodiments may be implemented by a computer program instructing relevant hardware. The program may be stored in a computer-readable storage medium. When the program is executed, the procedures in the method embodiments may be performed. The foregoing storage medium includes any medium that can store program code, such as a ROM, a random access memory RAM, a magnetic disk, or an optical disc. Therefore, another embodiment of this application provides a computer-readable storage medium. The computer-readable storage medium stores an instruction. When the instruction is run on a computer, the computer is enabled to perform the methods in the foregoing aspects.

Another embodiment of this application further provides a computer program product including an instruction. When the computer program product is run on a computer, the computer is enabled to perform the methods in the foregoing aspects.

A person of ordinary skill in the art may be aware that, in combination with the examples described in the embodiments disclosed in this application, units and algorithm steps may be implemented by electronic hardware or a combination of computer software and electronic hardware. Whether the functions are performed by hardware or software depends on a particular application and a design constraint of the technical solutions. A person skilled in the art may use different methods to implement the described functions for each particular application, but it should not be considered that such an implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments. Details are not described herein again.

In the embodiments provided in this application, it should be understood that the disclosed system, apparatus, and methods may be implemented in another manner. For example, the described apparatus embodiments are merely examples. For example, the division of units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, the embodiments may be implemented all or partially in a form of a computer program product. The computer program product includes one or more computer instructions. When the computer program instructions are loaded and executed on a computer, the procedure or functions according to the embodiments of the present invention are all or partially generated. The computer may be a general-purpose computer, a dedicated computer, a computer network, or another programmable apparatus. The computer instruction may be stored in a computer-readable storage medium, or may be transmitted by using the computer-readable storage medium. The computer instruction may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid state disk, SSD)), or the like.

## Claims

1. An information transmission method, comprising:
in a process in which a user terminal creates/modifies a protocol data unit PDU session between the user terminal and a user plane function network element, determining, by an application function network element, an association relationship of a port pair corresponding to the PDU session;
determining, by the application function network element, delay information of the port pair; and
sending, by the application function network element, port pair information to a time sensitive networking, wherein the port pair information comprises the association relationship of the port pair and the delay information of the port pair.

2. The method according to claim 1, wherein the method further comprises:
receiving, by the application function network element, a first message from the user plane function network element or a session management network element, wherein the first message comprises the association relationship of the port pair corresponding to the PDU session; and
the determining, by an application function network element, an association relationship of a port pair corresponding to the PDU session comprises:
determining, by the application function network element based on the first message, the association relationship of the port pair corresponding to the PDU session.

3. The method according to claim 1, wherein the determining, by an application function network element, an association relationship of a port pair corresponding to the PDU session comprises:
determining, by the application function network element, a virtual port identifier corresponding to the PDU session and a port identifier of the user plane function network element corresponding to the PDU session; and
associating, by the application function network element, the virtual port identifier corresponding to the PDU session with the port identifier of the user plane function network element corresponding to the PDU session, to generate the association relationship of the port pair corresponding to the PDU session.

4. The method according to claim 3, wherein the determining, by the application function network element, a virtual port identifier corresponding to the PDU session comprises:
assigning, by the application function network element, the virtual port identifier to the PDU session; or
determining, by the application function network element by receiving a second message from the user plane function network element or a session management network element, the virtual port identifier corresponding to the PDU session, wherein the second message is used to indicate the virtual port identifier corresponding to the PDU session.

5. The method according to claim 3, wherein the method further comprises:
receiving, by the application function network element from a session management network element, a data network name DNN corresponding to the PDU session; and
the determining, by the application function network element, a port identifier of the user plane function network element corresponding to the PDU session comprises:
determining, by the application function network element based on the DNN corresponding to the PDU session and port information of the user plane function network element, the port identifier of the user plane function network element corresponding to the PDU session.

6. The method according to claim 3, wherein the method further comprises:
receiving, by the application function network element from a session management network element, a DNN corresponding to the PDU session and one or more of virtual local area network VLAN information, class of service CoS information, or traffic class information corresponding to the PDU session; and
the determining, by the application function network element, a port identifier of the user plane function network element corresponding to the PDU session comprises:
determining, by the application function network element based on the DNN corresponding to the PDU session, the one or more of the VLAN information, the CoS information, or the traffic class information corresponding to the PDU session, and port information of the user plane function network element, the port identifier of the user plane function network element corresponding to the PDU session.

7. The method according to claim 1, wherein the method further comprises:
receiving, by the application function network element, a third message from the user plane function network element, a session management network element, or a policy management network element, wherein the third message comprises the delay information of the port pair corresponding to the PDU session; and
the determining, by the application function network element, delay information of the port pair comprises:
determining, by the application function network element, the delay information of the port pair based on the third message.

8. The method according to claim 7, wherein the third message further comprises a 5QI corresponding to the delay information of the port pair, and the port pair information further comprises traffic class information corresponding to the delay information of the port pair; and
the method further comprises:
determining, by the application function network element based on the 5QI corresponding to the delay information of the port pair, the traffic class information corresponding to the delay information of the port pair.

9. The method according to claim 7, wherein the third message further comprises traffic class information corresponding to the delay information of the port pair, and the port pair information further comprises the traffic class information corresponding to the delay information of the port pair.

10. The method according to claim 1, wherein the determining, by the application function network element, delay information of the port pair comprises:
obtaining, by the application function network element, a 5G quality of service identity 5QI of the PDU session, determining a packet delay budget PDB corresponding to the 5QI, and determining the PDB corresponding to the 5QI as the delay information of the port pair.

11. The method according to claim 1, wherein the method further comprises:
receiving, by the application function network element, first network topology information and/or second network topology information from a session management network element; and
sending, by the application function network element, the first network topology information and/or the second network topology information to the time sensitive networking, wherein
the first network topology information comprises a device identifier of a first peer device connected to the user terminal, a port identifier of the first peer device, a virtual switching node identifier corresponding to the PDU session, and a virtual port identifier of the user terminal; and the second network topology information comprises a device identifier of a second peer device connected to the user plane function network element corresponding to the PDU session, a port identifier of the second peer device, the virtual switching node identifier corresponding to the PDU session, and a port identifier of the user plane function network element.

12. The method according to claim 11, wherein the first network topology information further comprises one or more of VLAN information and/or CoS information of the first peer device, port capability information of the first peer device, VLAN information and/or CoS information of the virtual port, or port capability information of the virtual port; and the second network topology information further comprises one or more of VLAN information and/or CoS information of the second peer device, port capability information of the second peer device, VLAN information and/or CoS information of a port of the user plane function network element, or port capability information of the port of the user plane function network element.

13. An application function network element, comprising a processing unit and a transceiver unit, wherein
the processing unit is configured to: in a process in which a user terminal creates/modifies a PDU session between the user terminal and a user plane function network element, determine an association relationship of a port pair corresponding to the PDU session; and determine delay information of the port pair; and
the transceiver unit is configured to send port pair information to a time sensitive networking, wherein the port pair information comprises the association relationship of the port pair and the delay information of the port pair.

14. The application function network element according to claim 13, wherein
the transceiver unit is further configured to receive a first message from the user plane function network element or a session management network element, wherein the first message comprises the association relationship of the port pair corresponding to the PDU session; and
the processing unit is specifically configured to determine, based on the first message, the association relationship of the port pair corresponding to the PDU session.

15. The application function network element according to claim 13, wherein the processing unit is specifically configured to: determine a virtual port identifier corresponding to the PDU session and a port identifier of the user plane function network element corresponding to the PDU session; and associate the virtual port identifier corresponding to the PDU session with the port identifier of the user plane function network element corresponding to the PDU session, to generate the association relationship of the port pair corresponding to the PDU session.

16. The application function network element according to claim 15, wherein the processing unit is specifically configured to: assign the virtual port identifier to the PDU session; or determine, by receiving a second message from the user plane function network element or a session management network element, the virtual port identifier corresponding to the PDU session, wherein the second message is used to indicate the virtual port identifier corresponding to the PDU session.

17. The application function network element according to claim 16, wherein
the transceiver unit is further configured to receive, from a session management network element, a data network name DNN corresponding to the PDU session; and
the processing unit is specifically configured to determine, based on the DNN corresponding to the PDU session and port information of the user plane function network element, the port identifier of the user plane function network element corresponding to the PDU session.

18. The application function network element according to claim 15, wherein
the transceiver unit is further configured to receive, from a session management network element, a DNN corresponding to the PDU session and one or more of VLAN information, CoS information, or traffic class information corresponding to the PDU session; and
the processing unit is specifically configured to determine, based on the DNN corresponding to the PDU session, the one or more of the VLAN information, the CoS information, or the traffic class information corresponding to the PDU session, and port information of the user plane function network element, the port identifier of the user plane function network element corresponding to the PDU session.

19. The application function network element according to claim 13, wherein
the transceiver unit is further configured to receive a third message from the user plane function network element, a session management network element, or a policy management network element, wherein the third message comprises the delay information of the port pair corresponding to the PDU session; and
the processing unit is specifically configured to determine the delay information of the port pair based on the third message.

20. The application function network element according to claim 19, wherein the third message further comprises a 5QI corresponding to the delay information of the port pair, and the port pair information further comprises traffic class information corresponding to the delay information of the port pair; and the processing unit is further configured to determine, based on the 5QI corresponding to the delay information of the port pair, the traffic class information corresponding to the delay information of the port pair.

21. The application function network element according to claim 10, wherein the processing unit is specifically configured to: obtain a 5QI of the PDU session, determine a PDB corresponding to the 5QI, and determine the PDB corresponding to the 5QI as the delay information of the port pair.

22. The application function network element according to claim 13, wherein
the transceiver unit is further configured to: receive first network topology information and/or second network topology information from a session management network element; and send the first network topology information and/or the second network topology information to the time sensitive networking, wherein
the first network topology information comprises a device identifier of a first peer device connected to the user terminal, a port identifier of the first peer device, a virtual switching node identifier corresponding to the PDU session, and a virtual port identifier of the user terminal; and the second network topology information comprises a device identifier of a second peer device connected to the user plane function network element corresponding to the PDU session, a port identifier of the second peer device, the virtual switching node identifier corresponding to the PDU session, and a port identifier of the user plane function network element.

23. An information transmission method, comprising:
determining, by a session management network element, an association relationship of a port pair corresponding to a PDU session, and sending the association relationship of the port pair to a policy management network element, a user plane function network element, or an application function network element; and
determining, by the session management network element, delay information of the port pair, and sending the delay information of the port pair to the policy management network element or the application function network element.

24. The method according to claim 23, wherein the determining, by the session management network element, delay information of the port pair comprises:
obtaining, by the session management network element, a 5QI of the PDU session from the policy management network element, determining a PDB corresponding to the 5QI, and determining the PDB corresponding to the 5QI as the delay information of the port pair.

25. The method according to claim 23, wherein the method further comprises:
determining, by the session management network element, traffic class information corresponding to the delay information of the port pair.

26. The method according to claim 23, wherein the method further comprises:
receiving, by the session management network element, first network topology information, and/or receiving second network topology information from the user plane function network element; and
sending, by the session management network element, the first network topology information and/or the second network topology information to the application function network element.

27. The method according to claim 26, wherein the receiving, by the session management network element, first network topology information comprises:
receiving, by the session management network element through a NAS message, the first network topology information from a user terminal corresponding to the PDU session.

28. The method according to claim 26, wherein the receiving, by the session management network element, first network topology information comprises:
receiving, by the session management network element, the first network topology information from the user plane function network element through an N4 interface message, wherein the first network topology information of the user plane function network element is from a user plane message of a user terminal corresponding to the PDU session.

29. The method according to claim 26, wherein the receiving, by the session management network element, second network topology information from the user plane function network element comprises:
receiving, by the session management network element, the second network topology information from the user plane function network element through an N4 interface message.

30. A session management network element, comprising a processing unit and a transceiver unit, wherein
the processing unit is configured to determine an association relationship of a port pair corresponding to a PDU session, and the transceiver unit is configured to send the association relationship of the port pair to a policy management network element, a user plane function network element, or an application function network element; and
the processing unit is configured to determine delay information of the port pair, and the transceiver unit is configured to send the delay information of the port pair to the policy management network element or the application function network element.

31. An application function network element, wherein the application function network element comprises a memory and a processor, the memory is configured to store an instruction, and the processor is configured to execute the instruction in the memory, so that the method according to any one of claims 1 to 12 is implemented.

32. A session management network element, wherein the session management network element comprises a memory and a processor, the memory is configured to store an instruction, and the processor is configured to execute the instruction in the memory, so that the method according to any one of claims 23 to 28 is implemented.

33. A computer-readable storage medium, wherein the computer-readable storage medium comprises an instruction, and when the instruction is run on a computer, the computer is enabled to perform the method according to any one of claims 1 to 12.

34. A computer-readable storage medium, wherein the computer-readable storage medium comprises an instruction, and when the instruction is run on a computer, the computer is enabled to perform the method according to any one of claims 23 to 28.

35. A computer program product comprising an instruction, wherein when the computer program product is run on a computer, the computer is enabled to perform the method according to any one of claims 1 to 12.

36. A computer program product comprising an instruction, wherein when the computer program product is run on a computer, the computer is enabled to perform the method according to any one of claims 23 to 28.

37. A computer chip, wherein the chip is connected to a memory, and the chip is configured to read and execute a software program stored in the memory, to perform the method according to any one of claims 1 to 12.

38. A computer chip, wherein the chip is connected to a memory, and the chip is configured to read and execute a software program stored in the memory, to perform the method according to any one of claims 23 to 28.

39. An information transmission system, comprising an application function network element and a time sensitive networking, wherein
the application function network element is configured to: in a process in which a user terminal creates/modifies a protocol data unit PDU session between the user terminal and a user plane function network element, determine an association relationship of a port pair corresponding to the PDU session; determine delay information of the port pair; and send port pair information to the time sensitive networking, wherein the port pair information comprises the association relationship of the port pair and the delay information of the port pair; and
the time sensitive networking is configured to: receive the port pair information, and create/modify a forwarding policy of a TSN flow on a virtual switching node based on the port pair information.

40. The system according to claim 39, wherein the application function network element is further configured to: receive a first message from the user plane function network element or a session management network element, wherein the first message comprises the association relationship of the port pair corresponding to the PDU session; and is specifically configured to determine, based on the first message, the association relationship of the port pair corresponding to the PDU session.

41. The system according to claim 39, wherein the application function network element is specifically configured to: determine a virtual port identifier corresponding to the PDU session and a port identifier of the user plane function network element corresponding to the PDU session; and associate the virtual port identifier corresponding to the PDU session with the port identifier of the user plane function network element corresponding to the PDU session, to generate the association relationship of the port pair corresponding to the PDU session.

42. The system according to claim 41, wherein the application function network element is specifically configured to: assign the virtual port identifier to the PDU session; or determine, by receiving a second message from the user plane function network element or a session management network element, the virtual port identifier corresponding to the PDU session, wherein the second message is used to indicate the virtual port identifier corresponding to the PDU session.

43. The system according to claim 41, wherein the application function network element is further configured to receive, from a session management network element, a data network name DNN corresponding to the PDU session, and is specifically configured to determine, based on the DNN corresponding to the PDU session and port information of the user plane function network element, the port identifier of the user plane function network element corresponding to the PDU session.

44. The system according to claim 41, wherein the application function network element is further configured to: receive, from a session management network element, a DNN corresponding to the PDU session and one or more of virtual local area network VLAN information, class of service CoS information, or traffic class information corresponding to the PDU session; and is specifically configured to determine, based on the DNN corresponding to the PDU session, the one or more of the VLAN information, the CoS information, or the traffic class information corresponding to the PDU session, and port information of the user plane function network element, the port identifier of the user plane function network element corresponding to the PDU session.

45. The system according to claim 39, wherein the application function network element is further configured to: receive a third message from the user plane function network element, a session management network element, or a policy management network element, wherein the third message comprises the delay information of the port pair corresponding to the PDU session; and is specifically configured to determine the delay information of the port pair based on the third message.

46. The system according to claim 45, wherein the third message further comprises a 5QI corresponding to the delay information of the port pair, and the port pair information further comprises traffic class information corresponding to the delay information of the port pair; and
the application function network element is further configured to determine, based on the 5QI corresponding to the delay information of the port pair, the traffic class information corresponding to the delay information of the port pair.

47. The system according to claim 45, wherein the third message further comprises traffic class information corresponding to the delay information of the port pair, and the port pair information further comprises the traffic class information corresponding to the delay information of the port pair.

48. The system according to claim 39, wherein the application function network element is specifically configured to: obtain a 5G quality of service identity 5QI of the PDU session, determine a packet delay budget PDB corresponding to the 5QI, and determine the PDB corresponding to the 5QI as the delay information of the port pair.

49. The system according to claim 39, wherein the application function network element is further configured to: receive first network topology information and/or second network topology information from a session management network element; and send the first network topology information and/or the second network topology information to the time sensitive networking, wherein
the first network topology information comprises a device identifier of a first peer device connected to the user terminal, a port identifier of the first peer device, a virtual switching node identifier corresponding to the PDU session, and a virtual port identifier of the user terminal; and the second network topology information comprises a device identifier of a second peer device connected to the user plane function network element corresponding to the PDU session, a port identifier of the second peer device, the virtual switching node identifier corresponding to the PDU session, and a port identifier of the user plane function network element.

50. The system according to claim 49, wherein the first network topology information further comprises one or more of VLAN information and/or CoS information of the first peer device, port capability information of the first peer device, VLAN information and/or CoS information of the virtual port, or port capability information of the virtual port; and the second network topology information further comprises one or more of VLAN information and/or CoS information of the second peer device, port capability information of the second peer device, VLAN information and/or CoS information of a port of the user plane function network element, or port capability information of the port of the user plane function network element.

51. An information transmission system, comprising a session management network element and an application function network element, wherein
the session management network element is configured to: determine an association relationship of a port pair corresponding to a PDU session, and send the association relationship of the port pair to the application function network element; and determine delay information of the port pair, and send the delay information of the port pair to the application function network element; and
the application function network element is configured to: receive the association relationship of the port pair and the delay information of the port pair, and send port pair information to a time sensitive networking, wherein the port pair information comprises the association relationship of the port pair and the delay information of the port pair.

52. The system according to claim 51, wherein the session management network element is specifically configured to obtain a 5QI of the PDU session from a policy management network element, determine a PDB corresponding to the 5QI, and determine the PDB corresponding to the 5QI as the delay information of the port pair.

53. The system according to claim 51, wherein the session management network element is further configured to determine traffic class information corresponding to the delay information of the port pair.

54. The system according to claim 51, wherein the session management network element is further configured to: receive first network topology information, and/or receive second network topology information from a user plane network element; and send the first network topology information and/or the second network topology information to the application function network element.

55. The system according to claim 54, wherein the session management network element is specifically configured to receive, through a NAS message, the first network topology information from a user terminal corresponding to the PDU session.

56. The system according to claim 54, wherein the session management network element is specifically configured to receive the first network topology information from the user plane function network element through an N4 interface message, wherein the first network topology information of the user plane function network element is from a user plane message of a user terminal corresponding to the PDU session.

57. The system according to claim 54, wherein the session management network element is specifically configured to receive the second network topology information from the user plane function network element through an N4 interface message.
